# EUROPÄISCHE PATENTSCHRIFT

(11) **EP 3 631 630 B1**
(45) Veröffentlichungstag und Bekanntmachung des Hinweises auf die Patenterteilung: **27.12.2023**
(21) Anmeldenummer: 18725229.1
(22) Anmeldetag: 17.05.2018
(51) Int. Cl.: H04L 12/40, H04L 12/42

(54) **VERTEILTE VERARBEITUNG VON PROZESSDATEN**
DISTRIBUTED PROCESSING OF PROCESS DATA
TRAITEMENT DISTRIBUÉ DE DONNÉES DE PROCESSUS

(30) Priorität: 24.05.2017 DE 102017208827
(43) Veröffentlichungstag der Anmeldung: 08.04.2020
(73) Patentinhaber: WAGO Verwaltungsgesellschaft mbH, 32423 Minden (DE)
(72) Erfinder: JEROLM, Daniel, 49152 Bad Essen (DE)
(74) Vertreter: Bardehle Pagenberg Partnerschaft mbB Patentanwälte Rechtsanwälte
(86) Internationale Anmeldenummer: PCT/EP2018/062907
(87) Internationale Veröffentlichungsnummer: WO 2018/215286

(56) Entgegenhaltungen:
- EP-A1- 1 933 494
- EP-A2- 0 802 655
- DE-A1-102014 105 207
- US-A1- 2016 359 978

## Beschreibung

### 1. Gebiet der Erfindung

Die Erfindung betrifft im Allgemeinen die verteilte Verarbeitung von Prozessdaten und im Speziellen die verteilte Verarbeitung von Prozessdaten an Datenbusteilnehmern eines Lokalbusses, insbesondere eines Ringbusses.

### 2. Stand der Technik

Ein Ringbus kommt zumeist in einer Automatisierungsanlage zum Einsatz. Automatisierungsanlagen werden insbesondere zur Steuerung von industriellen Anlagen, Gebäuden sowie von Verkehrsmitteln eingesetzt. Für die Steuerung einer Automatisierungsanlage sind zumeist mehrere Sensoren und Aktoren notwendig. Diese überwachen und steuern den von der Anlage ausgeführten Prozess. Die unterschiedlichen Sensoren und Aktoren einer Automatisierungsanlage werden dabei häufig auch als Automatisierungsgeräte bezeichnet.

Diese Automatisierungsgeräte können entweder direkt mit einer Steuerung der Automatisierungsanlage verbunden werden, oder können zunächst mit Ein- und Ausgangsmodulen, die häufig auch als E/A-Module bezeichnet werden, verbunden werden. Diese können dann wiederum direkt mit der Steuerung verbunden werden. Die Automatisierungsgeräte können dabei entweder direkt in den E/A-Modulen integriert sein oder können mit diesen über Kabel oder kabellos verbunden sein.

Die Steuerung einer Automatisierungsanlage wird in der Regel mit Hilfe einer oder mehrerer speicherprogrammierbaren Steuerungen, SPS, bewerkstelligt. Die SPSs können dabei hierarchisch oder dezentral in einer Automatisierungsanlage angeordnet sein. Dabei gibt es bei den SPS unterschiedliche Leistungsklassen, so dass diese je nach Rechen- und Speicherkapazität unterschiedliche Steuerungen und Regelungen übernehmen können. Eine SPS hat im einfachsten Fall Eingänge, Ausgänge, ein Betriebssystem (Firmware) und eine Schnittstelle, über die ein Anwenderprogramm geladen werden kann. Das Anwenderprogramm legt fest, wie die Ausgänge in Abhängigkeit von den Eingängen geschaltet werden sollen. Dabei können die Eingänge und Ausgänge mit den Automatisierungsgeräten und/oder den E/A-Modulen verbunden werden und anhand der im Anwenderprogramm hinterlegten Logik kann der Prozess, der von der Automatisierungsanlage durchgeführt wird, überwacht beziehungsweise gesteuert werden. Dabei wird die Überwachung des Prozesses durch die Sensoren bewerkstelligt und die Steuerung des Prozesses durch die Aktoren. Die Steuerung kann auch als zentrale Steuerung oder Zentraleinheit bezeichnet werden und übernimmt zumindest für ein mit der Steuerung verbundenes Automatisierungsgerät oder E/A-Modul die Steuerung.

Allerdings ist das direkte Verbinden der Automatisierungsgeräte mit der zumindest einen Steuerung oder der E/A-Module mit der zumindest einen Steuerung in Form einer parallelen Verdrahtung, d.h. von jedem Automatisierungsgerät oder jedem E/A-Modul wird je eine Leitung zur übergeordneten Steuerung verlegt, sehr aufwendig. Gerade bei steigendem Automatisierungsgrad einer Automatisierungsanlage wächst der Verkabelungsaufwand bei paralleler Verdrahtung. Dies ist mit großem Aufwand bei der Projektierung, Installation, Inbetriebnahme und Wartung verbunden.

Daher werden heutzutage in der Automatisierungstechnik zumeist Bussysteme eingesetzt, mit denen die Automatisierungsgeräte beziehungsweise die E/A-Module an die Steuerung angeschlossen werden können. Um die Anbindung der einzelnen Automatisierungsgeräte beziehungsweise der E/A-Module mit dem Bussystem noch weiter zu vereinfachen, werden heutzutage häufig einzelne Gruppen von Automatisierungsgeräten beziehungsweise E/A-Modulen mit Hilfe eines spezialisierten Lokalbusses zunächst untereinander zu einem Lokalbussystem verbunden und anschließend wird zumindest ein Teilnehmer dieses Lokalbusses mit dem Bussystem verbunden, welches mit der Steuerung verbunden ist. Dabei kann sich das Lokalbussystem von dem Bussystem unterscheiden, welches eingesetzt wird, um die Verbindung mit der Steuerung zu realisieren.

Der mit dem Bussystem der Steuerung verbundene Teilnehmer einer Gruppe von Lokalbusteilnehmern wird häufig auch als Lokalbusmaster bezeichnet. Alternativ wird auch die Bezeichnung Kopfstation des Lokalbussystems verwendet. Dieser Lokalbusmaster kann gegenüber anderen Lokalbusteilnehmer weitere Logiken, Schaltungen oder Funktionalitäten beinhalten, die zur Anbindung an das Bussystem der Steuerung notwendig sind. Auch kann der Lokalbusmaster selbst eine SPS beinhalten. Auch kann dieser Teilnehmer Logiken und Schaltungen zur Umsetzung zwischen den zwei Bussystemen aufweisen. Der Lokalbusmaster kann daher auch als Gateway oder Busumsetzer ausgebildet sein und sorgt für eine Umsetzung der im Format des einen Bussystems vorliegenden Daten in das Format des Lokalbussystems und umgekehrt. Zumeist aber nicht zwingend, ist der Lokalbusmaster auf die Anbindung des Lokalbusses an den übergeordneten Bus spezialisiert.

Die zum Einsatz kommenden Lokalbusse sind zumeist auf die speziellen Einsatzerfordernisse der Automatisierungsgeräte beziehungsweise E/A-Module abgestimmt oder berücksichtigen deren spezielle Hardwareausgestaltung. Dabei bilden die Gruppen an Automatisierungsgeräten beziehungsweise E/A-Modulen des Lokalbussystems zumeist eine Untergruppe der Automatisierungsanlage zur Ausführung einer speziellen Aufgabe in dem von der Automatisierungsanlage ausgeführten Prozess. Die auf den Bussen ausgetauschten Daten für den Prozess werden auch häufig als Lokalbusdaten oder Prozessdaten bezeichnet, weil diese Daten Informationen zur Regelung beziehungsweise Steuerung des von der Automatisierungsanlage ausgeführten Prozesses beinhaltet. Diese Daten können dabei unter anderem Messdaten, Steuerungsdaten, Zustandsdaten und/oder andere Informationen umfassen. Entsprechend des verwendeten Busprotokolls können diesen Daten andere Daten vorangestellt *(engl.* Header) oder angehängt *(engl.* Tail) sein. Diese anderen Daten können Informationen bezüglich der Daten beinhalten, oder Informationen bezüglich einer internen Kommunikation auf dem Lokalbus beinhalten. Hierbei ist eine Vielzahl von unterschiedlichen Informationen bekannt, die entsprechend des verwendeten Busprotokolls den Daten vorangestellt oder angefügt werden können. Die an einen Lokalbus angeschlossenen Lokalbusteilnehmer können auch als Datenbusteilnehmer bezeichnet werden, weil diese Daten auf dem Lokalbus austauschen. Ein Datenbusteilnehmer dient dabei zum Steuern oder Überwachen eines Prozesses, insbesondere durch eine Ausgabe von Steuersignalen z.B. an Aktoren und/oder durch einen Empfang von Messsignalen z.B. von Sensoren. Der Datenbusteilnehmer setzt die Steuersignale und/oder Messsignale in Daten für den Lokalbus um oder umgekehrt.

Ein Ringbus ist dabei eine spezialisierte Form des Lokalbusses, wie zum Beispiel aus US 5,472,347 A bekannt. In einem Ringbus sind die Datenbusteilnehmer, zum Beispiel die Automatisierungsgeräte beziehungsweise E/A-Module, jeweils mit ihren direkt benachbarten Datenbusteilnehmern verbunden und Daten werden der Reihe nach von einem zum anderen Datenbusteilnehmer weitergeleitet. Die auf dem Lokalbus übertragenen Daten können auch als Lokalbusdaten bezeichnet werden. Es werden also nicht allen Datenbusteilnehmern gleichzeitig die Daten zugesandt, sondern der Reihe nach, wobei ein Datenbusteilnehmer von seinem vorgelagerten Datenbusteilnehmer Daten erhält und Daten an seinen nachgelagerten Datenbusteilnehmer weiterleitet. Zwischen dem Erhalt der Daten und der Weiterleitung kann der Datenbusteilnehmer die erhaltenen Daten verarbeiten. Wenn die Daten den letzten Datenbusteilnehmer in der Reihe erreicht haben, so werden die Daten vom letzten Datenbusteilnehmer wieder der Reihe nach zurück an den ersten Datenbusteilnehmer zurückgeleitet. Das Zurückleiten kann dabei entweder durch alle Datenbusteilnehmer geschehen oder an diesen vorbei mit Hilfe einer Bypassleitung. Der Ringbus hat also einen Abwärtsstrom und Aufwärtsstrom von Daten. Die Daten in einem Ringbus werden meist in Form von Datenpaketen übertragen, die alle Datenbusteilnehmer durchlaufen.

In einem Ringbus werden die Datenpakete von einem zum anderen Datenbusteilnehmer weitergegeben. Dabei empfängt zu jeder gegebenen Zeit ein Datenbusteilnehmer von seinem vorgelagerten Datenbusteilnehmer immer nur einen Teil des Datenpakets. Die Datenbusteilnehmer nehmen sich dann die Zeit die sie benötigen, um die im empfangenen Teil des Datenpakets enthaltenen Daten zu verarbeiten, bevor diese weitergeleitet werden. Hat ein Datenbusteilnehmer nur eine begrenzte Zeit beziehungsweise Arbeitstakte zur Verfügung die Daten zu verarbeiten, bis diese weitergleitet werden müssen, so sind die ausführbaren Verarbeitungen begrenzt.

Die DE 102014105207 A1 offenbart ein Kommunikationsnetzwerk umfassend einen Master und mehrere Teilnehmer, in welchem Netzwerk mittels jeden Datagramms ein oder mehrere Teilnehmer adressiert werden.

Die EP 0802655 A2 offenbart einen ringförmigen Bus mit einer Master-Station und Slave-Stationen, wobei vorbereitete Daten in einer Station zu einem eingehenden Datenpaket zusammengestellt und auf den Bus ausgegeben werden.

Aufgabe der vorliegenden Erfindung ist es daher, ein Verfahren bereitzustellen, mit dem auch komplexe Verarbeitungen mit Prozessdaten möglich sind, ohne dass diese dazu länger an einem jeweiligen Datenbusteilnehmer verbleiben als die zuvor bestimmte feste Zeit oder Arbeitstakte, die einem Datenbusteilnehmer zur Verarbeitung von Daten zugewiesen ist.

### 3. Zusammenfassung der Erfindung

Diese Aufgabe wird mit dem Verfahren des unabhängigen Anspruchs gelöst. Vorteilhafte Ausführungsformen sind in den Unteransprüchen beschrieben. Das erfindungsgemäße Verfahren zur verteilten Verarbeitung von Prozessdaten in einem Lokalbus, insbesondere einem Ringbus, mit einem Lokalbusmaster und zumindest zwei Datenbusteilnehmern weist dabei zunächst das Senden eines Datenpakets mit Prozessdaten über den Lokalbus auf, wobei das Datenpaket von dem Lokalbusmaster gesendet wird. Das Datenpaket wird vorzugsweise originär vom Lokalbusmaster erzeugt und über den Lokalbus an die Datenbusteilnehmer gesendet. Beim Erzeugen kann der Lokalbusmaster von der Steuerung, beispielsweise einer SPS, empfangene Prozessdaten in das Datenpaket einfügen. Das Datenpaket kann aber auch Prozessdaten von dem Lokalbusmaster selbst und/oder der Steuerung enthalten. Die Datenpakete können auch als Telegramme bezeichnet werden. Ein Datenpaket weist beispielsweise Header, Payload und vorteilhafterweise eine Prüfsumme auf. Dabei können Datenpakete die Prozessdaten tragen auch als Prozessdatenpaket bezeichnet werden. Vorteilhafterweise weist ein Prozessdatenpaket keine Adresse zur Übertragung der Prozessdaten an einen oder von einem Datenbusteilnehmer im Lokalbus auf. In dem Prozessdatenpaket sind die Prozessdaten beispielsweise derart angeordnet, dass Datenbusteilnehmer auf Grund der jeweiligen Position der Prozessdaten in dem Prozessdatenpaket, beispielsweise ein oder mehrere Bits innerhalb eines zugeordneten zusammenhängenden Datenblocks (1 Byte), diejenigen dem jeweiligen Datenbusteilnehmer zugehörigen Prozessdaten erkennen können. Vorteilhafterweise weist das Prozessdatenpaket eine Kennung (IDE) auf, die dem Typ des Datenpakets, also dem Prozessdatenpaket zugeordnet und durch den Datenbusteilnehmer identifizierbar ist. Die Prozessdaten können auch als Lokalbusdaten bezeichnet werden. Das Prozessdatenpaket kann beispielsweise in einem Zyklusrahmen kommuniziert werden. Ein Zyklusrahmen kann dabei beispielsweise als ein wiederkehrendes (zyklisches) vorzugsweise äquidistantes Zeitintervall, in dem Daten auf dem Lokalbus übertragbar sind, definiert werden. Der Zyklusrahmen weist beispielsweise zumindest eine Startkennung (SOC) und einen Zeitbereich zur Übertragung von Daten auf. Mehrere Startkennungen (SOC) aufeinander folgender Zyklusrahmen sind dabei vorteilhafterweise in einem zeitlich äquidistanten Abstand zueinander. Der genannte Zeitbereich ist für die Übertragung der Datenpakete vorgesehen. Die Startkennung (SOC) und die Datenpakete werden über den Lokalbus übertragen und durchlaufen alle Datenbusteilnehmer. Die Startkennung (SOC) ist separat, also als eigenständiges Symbol übertragbar oder vorteilhafterweise in einem Startdatenpaket (SOC-Paket) enthalten.

Innerhalb des Zeitbereichs des Zyklusrahmens werden keine, ein oder mehrere Datenpakete übertragen. Vorteilhafterweise werden in einem Zyklusrahmen Leerlauf-Daten (Idle-Data) eingefügt, insbesondere angrenzend an zumindest ein Datenpaket. Vorteilhafterweise bewirkt die Übertragung der Datenpakete und/oder der Leerlauf-Daten ein ununterbrochenes Signal auf dem Lokalbus. Das Signal ermöglicht es den Datenbusteilnehmern, sich auf dieses zeitlich zu synchronisieren. Vorteilhafterweise weist der Zyklusrahmen zusätzlich einen Trailer auf. Der Trailer hat eine variable Länge und folgt auf den Zeitbereich zur Datenübertragung vorzugsweise bis zur folgenden Startkennung (SOC) des nächsten Zyklusrahmens. Vorteilhafterweise weist der Trailer Leerlauf-Daten auf.

Das Datenpaket und damit die darin enthaltenen Prozessdaten können dabei schrittweise die einzelnen Datenbusteilnehmer des Lokalbusses durchlaufen. Während des Durchlaufs des Datenpakets durch die Datenbusteilnehmer können diese die in dem Datenpaket enthaltenen Prozessdaten verarbeiten.

Erfindungsgemäß empfängt ein erster Datenbusteilnehmer das Datenpaket, d.h. einen ersten Teil des Datenpakets. Dieser Teil des Datenpakets kann die Prozessdaten enthalten, die für den ersten Datenbusteilnehmer bestimmt sind. Bestimmt heißt in diesem Zusammenhang, dass die jeweiligen Prozessdaten dazu geeignet sind von dem Datenbusteilnehmer für den sie bestimmt sind, dazu verwendet zu werden, an genau diesem Datenbusteilnehmer eine Steuerung, Regelung oder Auswertung durchzuführen. Der erste Datenbusteilnehmer kann aber auch Prozessdaten in dem ersten Teil des Datenpakets empfangen, die nicht für diesen Datenbusteilnehmer bestimmt sind, sondern für einen im Lokalbus nachgelagerten zweiten Datenbusteilnehmer. D.h. diese Prozessdaten sind für den einen zweiten Datenbusteilnehmer bestimmt, um genau an diesem Datenbusteilnehmer eine Steuerung, Regelung oder Auswertung durchzuführen. Hierbei kann beispielsweise der von dem ersten Datenbusteilnehmer empfangene Teil des Datenpakets ausschließlich Prozessdaten bestimmt für den ersten Datenbusteilnehmer enthalten, oder einen Teil an Prozessdaten enthalten, die für den ersten Datenbusteilnehmer bestimmt sind und einen anderen Teil an Prozessdaten enthalten, die für den zweiten Datenbusteilnehmer bestimmt sind, oder ausschließlich Prozessdaten, die für den zweiten Datenbusteilnehmer bestimmt sind.

Weist der gerade empfangene Teil des Datenpakets Prozessdaten auf, die für den zweiten Datenbusteilnehmer bestimmt sind, so führt der erste Datenbusteilnehmer erfindungsgemäß Vorverarbeitung dieser Prozessdaten aus. Das Ausmaß der Vorverarbeitung ist dabei davon abhängig, wieviel Kapazität, d.h. Arbeitstake oder Zeit, der erste Datenbusteilnehmer noch zur Verfügung hat, bevor der erste Datenbusteilnehmer das Datenpaket beziehungsweise den Teil des Datenpakets an den zweiten Datenbusteilnehmer weiterleiten muss. Die Zeit die ein Datenbusteilnehmer zur Verfügung hat entspricht der Zeit, die zwischen Empfang und Weiterleitung des Datenpakets liegt. Wenn der dem ersten Datenbusteilnehmer momentan vorliegende Teil des Datenpakets keine für den ersten Datenbusteilnehmer bestimmte Prozessdaten aufweist, der erste Datenbusteilnehmer also auch keine Verarbeitung ausführen muss, so sind alle Arbeitstakte des ersten Datenbusteilnehmers frei für eine Vorverarbeitung. Nach der Vorverarbeitung kann der erste Datenbusteilnehmer das Datenpaket beziehungsweise zumindest den momentan vorgehaltenen Teil des Datenpakets mit dem zumindest einen vorverarbeiteten Prozessdatum über den Lokalbus an den zweiten Datenbusteilnehmer senden. Dabei können beispielsweise Prozessdaten eine Mehrzahl von Bits sein, wobei ein einzelnes Prozessdatum ein einzelnes Bit sein kann. Der erste und zweite Datenbusteilnehmer müssen nicht direkt benachbart im Lokalbus angeordnet sein. Der erste Datenbusteilnehmer muss dem zweiten Datenbusteilnehmer nur vorgelagert sein, d.h. das Datenpaket beziehungsweise den das vorzuverarbeitende Prozessdatum enthaltenen Teil des Datenpakets vor dem zweiten Datenbusteilnehmer erhalten, damit dieser vor dem zweiten Datenbusteilnehmer die Verarbeitung durchführen kann.

Das erfindungsgemäße Verfahren weist weiter auf, das Empfangen des Datenpakets mit dem zumindest einen vorverarbeiteten Prozessdatum an dem zweiten Datenbusteilnehmer und Weiterverarbeiten des zumindest einen vorverarbeiteten Prozessdatums durch den zweiten Datenbusteilnehmer. Dieses Weiterverarbeiten kann auch darin bestehen eine weitere Vorverarbeitung durchzuführen für einen weiter dem zweiten Datenbusteilnehmer nachgelagerten Datenbusteilnehmer. In diesem Fall wird der zweite Datenbusteilnehmer zum ersten Datenbusteilnehmer und führt eine Vorverarbeitung für einen zweiten Datenbusteilnehmer aus. Die Weiterverarbeitung kann aber auch darin bestehen, dass mit den Prozessdaten eine Steuerung, Regelung oder Auswertung durchgeführt wird.

Durch das Verteilen der Verarbeitung von Prozessdaten auf mehrere Datenbusteilnehmer ergibt sich eine optimale Ausnutzung der am Lokalbus zur Verfügung stehenden Ressourcen, also die beste Ausnutzung der den Datenbusteilnehmern zur Verfügung stehenden freien Kapazitäten. Dabei ist die Komplexität der für einen Datenbusteilnehmer ausführbaren Vorverarbeitung durch vorgelagerte Datenbusteilnehmer direkt proportional zu deren Anzahl und deren freien Kapazitäten. Je weiter ein Datenbusteilnehmer von dem Lokalbusmaster in Abwärtsrichtung des Lokalbusses angeordnet ist, desto mehr Vorverarbeitungsschritte können durch die vorgelagerten Datenbusteilnehmer für diesen Datenbusteilnehmer durchgeführt werden. Die Datenbusteilnehmer des Lokalbusses fungieren dementsprechend als verteilte Logiken für die Verarbeitung von Prozessdaten. Dabei kann der Lokalbus bereits bei seinem Aufbau derart ausgestaltet werden, dass die Datenbusteilnehmer, die eine komplexere Vorverarbeitung ihrer Prozessdaten benötigen, weiter entfernt vom Lokalbusmaster platziert werden als diejenigen Datenbusteilnehmer, die eine einfache Vorverarbeitung ihrer Prozessdaten benötigen. Durch die verteilte Verarbeitung ist es auch möglich, die einzelnen Datenbusteilnehmer sehr einfach auszugestalten, weil eine komplizierte Verarbeitung nicht von einem Datenbusteilnehmer allein bewerkstelligt werden muss, sondern die Verarbeitung verteilt über eine Vielzahl von Datenbusteilnehmern geschieht. Dies führt auch zu einer Homogenität im Lokalbus. Es müssen nicht leistungsstarke Datenbusteilnehmer mit leistungsschwachen Datenbusteilnehmern kombiniert werden, sondern die Datenbusteilnehmer können alle die gleiche Leistungsstärke aufweisen. Dabei kann Leistungsstärke in Form von Rechenkapazität bewertet werden.

In einer bevorzugten Ausführungsform des erfindungsgemäßen Verfahrens weist das Vorverarbeiten das Schreiben des zumindest einen Prozessdatums in das Datenpaket durch den ersten Datenbusteilnehmer auf. Das Schreiben in das Datenpaket kann dabei in den gleichen Teil des Datenpakets geschehen aus dem das Prozessdatum zuvor gelesen wurde oder in einen anderen Teil des Datenpakets. Wird das zumindest eine Prozessdatum in einen anderen Teil des Datenpaket geschrieben, so wird das zumindest eine Prozessdatum zunächst im ersten Datenbusteilnehmer gespeichert solange bis der Teil des Datenpakets dem ersten Datenbusteilnehmer vorliegt, in den geschrieben werden soll. Der erste Datenbusteilnehmer kann aber auch in den gleichen Teil des Datenpakets schreiben und das zumindest eine Prozessdatum beispielsweise an einen anderen Platz in diesem Teil des Datenpakets schreiben. Das zu schreibende Prozessdatum kann dabei aus dem Speicher des ersten Datenbusteilnehmers stammen und/oder originär von dem Datenpaket gelesen worden sein, oder von zumindest einem Eingang des ersten Datenbusteilnehmers erhalten worden sein, oder eine Kombination aus den zuvor genannten darstellen. Es ist auch denkbar, dass zumindest ein Prozessdatum aus dem Datenpaket gelesen wird, eine Operation mit diesem zumindest einen Prozessdatum durchgeführt wird und das zumindest eine verarbeitete Prozessdatum wieder an der gleichen Stelle in den Teil des Datenpakets geschrieben wird aus dem das Prozessdatum gelesen wurde.

In einer bevorzugten Ausführungsform des erfindungsgemäßen Verfahrens weist dieses weiter den Schritt auf von Speichern des gelesenen zumindest einen Prozessdatums bevor diese geschrieben wird. Das Speichern kann dabei alle Arten des Vorhaltens des gelesenen zumindest einen Prozessdatums umfassen. Es ist dabei nur von Bedeutung, dass der Datenbusteilnehmer Zugriff auf das zumindest eine gelesene Prozessdatum hat, d.h. Zugriff auf den Speicher hat. Entsprechend kann das gelesene zumindest eine Prozessdatum in dem Datenbusteilnehmer selbst gespeichert werden, beispielsweise in einem Speicher des Datenbusteilnehmers, oder in einem mit dem Datenbusteilnehmer verbundenen Speicher. Die Verbindung zwischen Datenbusteilnehmer und Speicher kann dabei kabelgebunden oder kabellos geschehen. Auch ist denkbar, dass der Speicher ein Zusatzmodul ist, welches mit dem Datenbusteilnehmer verbunden werden kann. Der Speicher kann beliebig ausgestaltet sein.

In einer bevorzugten Ausführungsform des erfindungsgemäßen Verfahrens weist das Datenpaket eine Vielzahl von Symbolen auf, wobei jedes Symbol eine bestimmte Anzahl von Bits aufweist, beispielsweise 8 Bits also 1 Byte. Das Datenpaket durchläuft dementsprechend einheitenweise, stückchenweise, oder Teile weise, zum Beispiel in Form von Symbolen die Datenbusteilnehmer. Ein derartiger Teil des Datenpakets wird im Folgenden auch als Stück oder Einheit des Datenpakets bezeichnet. Die Datenbusteilnehmer haben dementsprechend zu jeder gegebenen Zeit immer nur einen Teil des Datenpakets vorliegen. Der letzte Datenbusteilnehmer im Lokalbus sendet die von diesem Datenbusteilnehmer verarbeiteten Teile des Datenpakets in Aufwärtsrichtung entweder erneut durch alle Datenbusteilnehmer oder über eine Bypassleitung zurück an den Lokalbusmaster. Sofern die Teile des Datenpaktes erneut durch die Datenbusteilnehmer gesendet werden, so kann eine weitere Verarbeitung der Teile des Datenpakets geschehen. Beispielsweise kann eine zeitliche Korrektur von Signalflanken erfolgen. Bei einer Verarbeitung der Teile des Datenpakets kann auch eine verteilte erfindungsgemäße Vorverarbeitung der Prozessdaten stattfinden, um beispielsweise bereits vor Ankunft der Prozessdaten an dem Lokalbusmaster Auswertungen durchzuführen oder um die Prozessdaten in ein spezielles Format zu bringen, so dass diese einfacher von dem Lokalbusmaster verarbeitet werden können oder an die übergeordnete Steuerung weitergegeben werden können.

In einer weiteren bevorzugten Ausführungsform des erfindungsgemäßen Verfahrens weist das Empfangen auf, dass das Datenpaket symbolweise empfangen wird, also zu jeder gegebenen Zeit immer nur ein Teil des Datenpakets beim Datenbusteilnehmer zur Verfügung steht. Dieses Symbol kann 8 Bits aufweisen also 1 Byte. Es ist dem Fachmann aber bewusst, dass die Stückelung des Datenpakets auch in anderen Einheiten geschehen kann, die mehr oder weniger als 8 Bits umfassen. Nach Verarbeitung des einen Teils des Datenpakets, also nach Verarbeitung des einen Symbols sendet ein Datenbusteilnehmer den gerade bearbeiteten Teil an den nachgelagerten Datenbusteilnehmer weiter und empfängt im gleichen Schritt von dem vorgelagerten Datenbusteilnehmer einen neuen Teil des Datenpakets. Ein Verarbeiten des Teils des Datenpakets kann auch darin bestehen, dass der Datenbusteilnehmer den Teil des Datenpakets überspringt, also keine Verarbeitung durchführt. Damit eine deterministische Verarbeitungszeit gewährleistet werden kann, kann der Teil des Datenpakets aber auch bei Nichtverarbeitung eine bestimmte Anzahl von Arbeitstakten am Datenbusteilnehmer verbleiben. Dies ist nötig, um den anderen Datenbusteilnehmern genügend Zeit zu geben, ihre Verarbeitungen durchzuführen, bevor ein neuer Teil des Datenpakets empfangen wird. Eine Verarbeitung eines Teils eines Datenpakets, d.h. beispielsweise von einem Symbol eines Datenpakets, kann dabei bitgranular geschehen. Es kann also eine Bitoperation auf zumindest einem Bit eines empfangenen Symbols ausgeführt werden zum Erhalt des zumindest einen vorverarbeiteten Prozessdatums, wobei die Operation die Verarbeitung des Prozessdatums darstellt. Die Bitoperationen die durchgeführt werden können basieren beispielsweise auf einem reduzierten Instruktionssatz den der Datenbusteilnehmer ausführen kann, beispielsweise "SKIP", "MOVE", "INCREMENT", "NEGATION", "AND" und "OR" oder einer Kombination daraus. Welche Bitoperationen ausgeführt werden sollen, kann in dem Datenbusteilnehmer beispielsweise mit Hilfe von Instruktionslisten hinterlegt sein. Diese Instruktionslisten enthalten für jeden Teil des Datenpakets oder für jedes Bit des Datenpakets vorzugsweise eine Instruktion, d.h. eine Operation die mit dem entsprechenden Bit durchgeführt werden soll. Soll der Datenbusteilnehmer beispielsweise mit dem Bit keine Verarbeitung durchführen, so kann die entsprechende Instruktionsliste für das entsprechende Bit leer sein oder eine "SKIP" Instruktion aufweisen. Die Instruktionsliste kann auch die Anzahl der Wiederholungen für eine bestimmte Instruktion aufweisen. Beispielsweise kann die Instruktionsliste eine "SKIP" Instruktion beinhalten, mit dem Hinweis diese zweimal zu wiederholen. In diesem Fall werden dann die nächsten zwei Bit nicht verarbeitet, sondern übersprungen. Auch für die Instruktionen "MOVE", "NEGATION", "INCREMENT", "AND" und "OR" können Parameter vorgegeben sein. Der Datenbusteilnehmer kann eine Vielzahl von Instruktionslisten gespeichert haben. Der Lokalbusmaster kann dabei den Prozessdaten im Datenpaket einen Instruktionslistenindex voranstellen, der die Datenbusteilnehmer anweist, eine ganz bestimmte Instruktionsliste für die folgenden Teile des Datenpakets, d.h. die Prozessdaten, zu verwenden. Dabei kann der Instruktionslistenindex auf einen bestimmten Speicherplatz im Datenbusteilnehmer hinweisen, in dem zumindest eine erste Instruktion der Instruktionsliste gespeichert ist oder kann auf einen bestimmten Verweis hinweisen, der auf die bestimmte Instruktionsliste oder zumindest die erste Instruktion in der Instruktionsliste hinweist.

In einer weiteren bevorzugten Ausführungsform des erfindungsgemäßen Verfahrens weist dieses das Lesen des zumindest einen Prozessdatums aus einem Symbol des Datenpakets auf und das anschließende Schreiben des Prozessdatums in dasselbe Symbol des Datenpakets oder beispielsweise in ein folgendes Symbol desselben Datenpakets. Das folgende Symbol kann dabei unmittelbar auf das aktuelle Symbol folgen oder mittelbar folgen, also durch eine Anzahl von Symbolen beabstandet sein. Dabei kann das Vorverarbeiten also in einem Umspeichern des zumindest einen Prozessdatums innerhalb desselben Datenpakets bestehen. Der erste Datenbusteilnehmer kann dabei das zumindest eine Prozessdatum aus einem Symbol lesen, welches gerade am Datenbusteilnehmer zur Verarbeitung ist und kann das zumindest eine Prozessdatum an einen anderen Platz in demselben Symbol schreiben, bevor das Symbol an den zweiten Datenbusteilnehmer gesendet wird, um dort weiterverarbeitet zu werden. Dieses Lesen und Schreiben kann in zwei Arbeitstakten geschehen. Diese Vorverarbeitung durch den ersten Datenbusteilnehmer hat den Vorteil, dass der zweite Datenbusteilnehmer selbst keine Umspeicherung vornehmen muss. Der zweite Datenbusteilnehmer muss dementsprechend keine Arbeitstakte opfern, sondern kann seine Arbeitstakte dazu verwenden, eine eigene Verarbeitung der Prozessdaten durchzuführen. Es ist auch denkbar, dass der erste Datenbusteilnehmer das gelesene zumindest eine Prozessdatum nicht wieder in dasselbe Symbol schreibt, sondern erst zwischenspeichert und in ein später an diesem Datenbusteilnehmer anliegendes Symbol des gleichen Datenpakets schreibt, um so die Position des zumindest einen Prozessdatums in dem Datenpaket zu ändern.

In einer weiteren Ausführungsform des erfindungsgemäßen Verfahrens weist dieses das Empfangen einer Instruktionsliste an dem ersten Datenbusteilnehmer von dem Lokalbusmaster auf. Dabei kann der Lokalbusmaster jedem Datenbusteilnehmer die Instruktionsliste beispielsweise über eine Kommunikation zusenden in der dem Datenbusteilnehmer keine Prozessdaten gesendet werden. Beispielsweise kann der Lokalbusmaster den Datenbusteilnehmern die Instruktionslisten in Kommunikationsdatenpaketen senden. Ein Kommunikationsdatenpaket enthält keine Prozessdaten. Vorteilhafterweise enthält ein Kommunikationsdatenpaket Daten insbesondere zum Programmieren und/oder zum Steuern und/oder zum Überwachen und/oder zum Identifizieren zumindest eines Datenbusteilnehmers. Vorteilhafterweise weist das Kommunikationsdatenpaket eine Adresse auf, die mindestens einem Datenbusteilnehmer zugeordnet ist. Vorzugsweise ist der Datenbusteilnehmer eingerichtet, die Adresse auszuwerten. Wenn das Kommunikationsdatenpaket eine Instruktionsliste enthält, kann der Datenbusteilnehmer diese Instruktionsliste speichern. Anschließend kann in einem Prozessdatenpaket, d.h. in einer Kommunikation in der dem Datenbusteilnehmer Prozessdaten gesendet werden, den Prozessdaten ein Instruktionslistenindex vorangestellt werden, der den Datenbusteilnehmern anzeigt, welche der gespeicherten Instruktionslisten zu verwenden ist. Ein Instruktionslistenindex ist also einer Instruktionsliste zugeordnet oder umgekehrt, so dass mit Hilfe des Instruktionslistenindexes die zu verwendende Instruktionsliste identifiziert werden kann. Hierzu weist der Instruktionslistenindex bevorzugt einen Wert auf, der zugeordnet ist zu einer Instruktionsliste, beispielsweise weist der Wert auf eine bestimmte Instruktionsliste hin oder auf deren Speicherplatz. Dazu kann der Wert selbst die Speicheradresse sein, wo die Instruktionsliste gespeichert ist oder wo zumindest eine erste Instruktion der Instruktionsliste gespeichert ist. Alternativ oder zusätzlich kann der Wert auch auf einen Speicherbereich hinweisen, in dem die entsprechende Instruktionsliste abgespeichert ist. In den zuvor genannten Fällen kann auch von einer direkten Zuordnung gesprochen werden. Der Wert des Instruktionslistenindex kann beispielsweise aber auch verwendet werden, als Eingabe einer Umsetzungstabelle (*engl.* Lookup-Tabelle, LUT). Dabei ist der Wert des Instruktionslistenindex der Eingangswert der Umsetzungstabelle. Der Ausgangswert der Umsetzungstabelle kann die Speicheradresse der ersten Instruktion in der zugehörigen Instruktionsliste sein oder anderweitig die Instruktionsliste identifizieren. Die Umsetzungstabelle kann softwaretechnisch sowie hardwaretechnisch in Form von beispielsweise Logiken hinterlegt sein und eine eineindeutige Umsetzung von einem Eingangswert in einen Ausgangswert angeben, wobei der Ausgangswert einen Hinweis auf die zu verwendende Instruktionsliste gibt. Dabei hängt es von der Umsetzungstabelle ab, wie ein Zusammenhang zwischen dem Instruktionslistenindex und der Instruktionsliste hergestellt wird. Bei der Verwendung einer Umsetzungstabelle kann auch von einer indirekten Zuordnung gesprochen werden. Bei der direkten sowie indirekten Zuordnung ist aber über den Instruktionslistenindex die von dem Datenbusteilnehmer zu verwendende Instruktionsliste eineindeutig identifizierbar, d.h. auffindbar.

In einer bevorzugten Ausführungsform des erfindungsgemäßen Lokalbusses weist das gesendete und empfangene Datenpaket eine Vielzahl von Symbolen auf, wobei zu jeder gegebenen Zeit nur ein Symbol des Datenpakets an einem entsprechenden Datenbusteilnehmer anliegt. Das Mittel zum Senden des Datenpakets mit den Prozessdaten und das Mittel zum Senden des zumindest einen vorverarbeiteten Prozessdatums sind somit angepasst symbolweise zu senden. Entsprechend sind das Mittel zum Empfangen des Datenpakets mit den Prozessdaten und das Mittel zum empfangen des zumindest einen Prozessdatums angepasst symbolweise zu empfangen. D.h. ein Symbol des Datenpakets verbleibt nur eine gewisse Zeit am Datenbusteilnehmer, bis dieser vom vorgelagerten Datenbusteilnehmer ein neues Symbol empfängt und das gerade vorgehaltene Symbol an den nachgelagerten Datenbusteilnehmer weitersendet. Das symbolweise Durchschleifen des Datenpakets durch die Datenbusteilnehmer kann dabei durch den Arbeitstakt der Datenbusteilnehmer festgelegt sein, beispielsweise nach zwei Arbeitstakten erfolgt ein Weitersenden, oder die Weitersendung kann allein durch das Empfangen eines neuen Symbols ausgelöst werden.

Die der Erfindung zu Grunde liegende Aufgabe wird auch gelöst durch ein Verfahren zur verteilten Verarbeitung von Prozessdaten in einem Lokalbus, insbesondere einem Ringbus, mit zumindest zwei Datenbusteilnehmern und einem Lokalbusmaster. Dabei weist das Verfahren ein Bestimmen der Auslastung des ersten Datenbusteilnehmers auf. Dabei gibt die Auslastung an, ob der erste Datenbusteilnehmer innerhalb der diesem ersten Datenbusteilnehmer zur Verfügung stehenden Arbeitstakte eine Vorverarbeitung von Prozessdaten für einen zweiten Datenbusteilnehmer ausführen kann. D.h., wenn der erste Datenbusteilnehmer beispielsweise ein Symbol eines Datenpakets empfängt und in diesem Symbol Prozessdaten enthalten sind, die keine Steuerung oder Regelung an dem ersten Datenbusteilnehmer hervorrufen, oder der Datenbusteilnehmer keine von seinen Sensoreingängen stammenden Daten in das Symbol schreiben muss, so ist die Auslastung des ersten Datenbusteilnehmers bzgl. dieses Symbols gleich null. Der erste Datenbusteilnehmer und dessen Rechenkapazitäten sind für die Verweildauer dieses Symbols, beispielsweise gemessen in Arbeitstakten, dementsprechend frei und können für eine Vorverarbeitung genutzt werden. D.h. der erste Datenbusteilnehmer kann mit den im Symbol befindlichen Prozessdaten eine Vorverarbeitung ausführen. Um dem ersten Datenbusteilnehmer anzuweisen eine entsprechende Vorverarbeitung auszuführen, wird zumindest eine Instruktionsliste erzeugt, wobei die zumindest eine Instruktionsliste einen Satz von Instruktionen aufweist zum Vorverarbeiten der Prozessdaten durch den ersten Datenbusteilnehmer, wobei die Instruktionen zum Vorverarbeiten abhängig sind von der Bestimmung der Auslastung. Je nachdem wieviel Rechenkapazität der erste Datenbusteilnehmer frei hat, desto mehr Vorverarbeitung mit Symbolen innerhalb des Datenpakets kann dieser ausführen. Dabei kann die erzeugte Instruktionsliste aber nicht nur Instruktionen zum Vorverarbeiten aufweisen, sondern auch Instruktionen aufweisen zum Verarbeiten von Prozessdaten, die für den ersten Datenbusteilnehmer bestimmt sind. D.h. die erzeugte Instruktionsliste weist für einige Symbole Instruktionen auf, die eine Vorverarbeitung bewirken, wohingegen für andere Symbole, insbesondere die Symbole mit für den ersten Datenbusteilnehmer bestimmten Prozessdaten, einer Verarbeitung der entsprechenden Prozessdaten bewirkt wird. Die erzeugte Instruktionsliste wird dann anschließend an den ersten Datenbusteilnehmer gesendet, beispielsweise in einer asynchronen Kommunikation, beispielsweise in einem Kommunikationsdatenpaket. Anschließend wird ein Prozessdatenpaket mit den Prozessdaten durch den Lokalbusmaster über den Lokalbus gesendet.

Der erste Datenbusteilnehmer führt dann die Instruktionen der Instruktionsliste aus, wobei für jedes Symbol eine Instruktion ausgeführt wird, bzw. sogar für jedes Bit in dem entsprechenden Symbol eine Instruktion der Instruktionsliste ausgeführt wird, wobei die Instruktionen entweder eine Verarbeitung oder eine Vorverarbeitung bewirken.

### 4. Kurze Beschreibung der Zeichnungen

Die Erfindung wird nachfolgend anhand von Ausführungsbeispielen mit den beigefügten Zeichnungen näher erläutert. Aus den beschriebenen Ausführungsbeispielen ergeben sich weitere Einzelheiten, Merkmale und Vorteile des Gegenstands der Erfindung. Es zeigen:
- Fig. 1: ein schematisches Blockdiagramm einer beispielhaften Automatisierungsanlage mit einer speicherprogrammierbaren Steuerung und einem beispielhaften Ringbus;
- Fig. 2: eine schematische Darstellung eines von einem Lokalbusmaster verwendeten Datenpakets mit Prozessdaten;
- Fig. 3: ein beispielhaftes Zeitdiagramm zeigend das Durchlaufen des in Fig. 2 gezeigten Datenpakets durch die beispielhaften Datenbusteilnehmer des in Fig. 1 gezeigten Ringbusses;
- Fig. 4a: Instruktionslisten der beispielhaften Datenbusteilnehmer des in Fig. 1 gezeigten Ringbusses zur Verarbeitung der Prozessdaten des in Fig. 2 gezeigten Datenpakets; und
- Fig. 4b: eine schematische Darstellung von Speichern in den beispielhaften Datenbusteilnehmern des in Fig. 1 gezeigten Ringbusses zum Vorhalten von Prozessdaten.

### 5. Beschreibung bevorzugter Ausführungsbeispiele

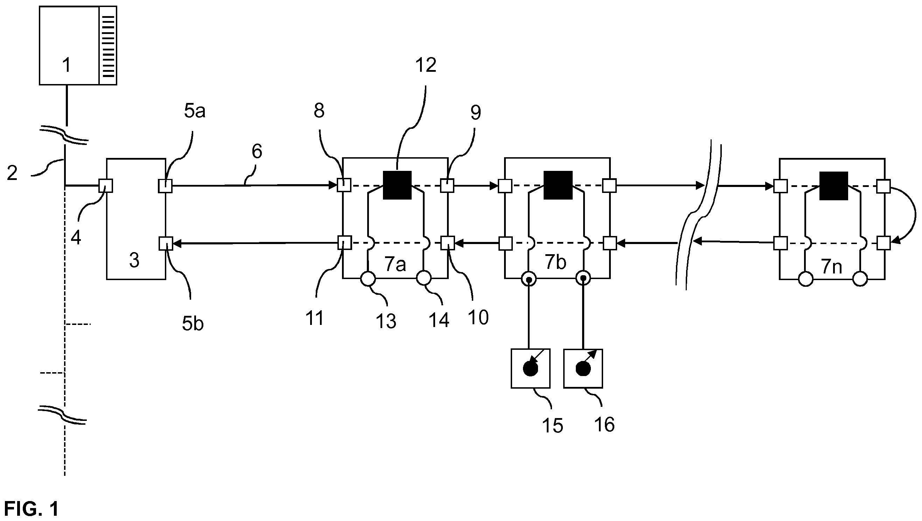

Figur 1 zeigt ein schematisches Blockdiagramm einer Automatisierungsanlage. Es wird vom Fachmann verstanden werden, dass die gezeigte Automatisierungsanlage nur beispielhaft ist und alle zu der Automatisierungsanlage gehörenden Elemente, Module, Bauteile, Teilnehmer und Einheiten verschieden ausgestaltet sein können aber dennoch die hier beschriebenen Grundfunktionalitäten erfüllen können.

Die in Figur 1 gezeigte Automatisierungsanlage weist eine übergeordnete Steuerung 1 auf, die beispielsweise mit einer speicherprogrammierbaren Steuerung, SPS, realisiert werden kann. Eine derartige SPS 1 dient grundsätzlich zur Steuerung und Regelung des von der Automatisierungsanlage ausgeführten Prozesses. Heutzutage übernehmen SPSs 1 in Automatisierungsanlagen allerdings auch weitergehende Funktionen, wie zum Beispiel die Visualisierung, Alarmierung und Aufzeichnung aller den Prozess betreffenden Daten und als solche fungiert die SPS 1 als eine Mensch-Maschine Schnittstelle. Es gibt SPS 1 in unterschiedlichen Leistungsklassen, die unterschiedliche Ressourcen (Rechenkapazität, Speicherkapazität, Anzahl und Art von Ein- und Ausgängen, und Schnittstellen) aufweisen, die es der SPS 1 ermöglichen den Prozess der Automatisierungsanlage zu steuern und zu regeln. Eine SPS 1 hat zumeist einen modularen Aufbau und besteht aus einzelnen Komponenten, die jeweils eine andere Aufgabe erfüllen. Üblicherweise besteht eine SPS 1 aus einer zentralen Rechenbaugruppe (mit einem oder mehreren Hauptprozessoren und Speichermodulen) und mehreren Baugruppen mit Eingängen und Ausgängen. Derartige modular aufgebaute SPS 1 lassen sich durch Hinzufügen von Baugruppen leicht erweitern. Hierbei hängt es von der Komplexität des Prozesses und der Komplexität des Aufbaus der Automatisierungsanlage ab, welche Baugruppen in der SPS 1 integriert sein müssen. In heutigen Automatisierungsanlagen ist die SPS 1 auch zumeist kein unabhängiges System mehr, sondern die SPS 1 ist über entsprechende Schnittstellen - hier nicht dargestellt - mit dem Internet oder Intranet verbunden. Dies bedeutet, die SPS 1 ist Teil eines Netzwerkes über welches oder von welchem die SPS 1 Informationen, Instruktionen, Programmierungen etc. erhalten kann. Zum Beispiel kann die SPS 1 über eine Verbindung zu einem sich im Intranet oder Internet befindlichen Computer Informationen über dem Prozess zugeführte Materialien bekommen, so dass beispielsweise durch die Kenntnis deren Anzahl oder Beschaffenheit der Prozess optimal gesteuert werden kann. Es ist auch denkbar, dass die SPS 1 durch einen Zugriff aus dem Intranet oder Internet von einem Anwender gesteuert wird. So kann beispielsweise ein Anwender mit Hilfe eines Computers, auch Leitrechner genannt, auf die SPS 1 zugreifen und deren Anwenderprogrammierung überprüfen, ändern, oder korrigieren. Dementsprechend ist der Zugriff auf die SPS 1 von einer oder mehreren Fernwarten oder Leitstellen möglich. Die Leitrechner können gegebenenfalls Visualisierungseinrichtungen zur Darstellung von Prozessabläufen haben.

Zur Steuerung des Prozesses der Automatisierungsanlage ist die SPS 1 mit Automatisierungsgeräten verbunden. Um den Verdrahtungsaufwand gering zu halten werden für diese Verbindungen Bussysteme verwendet. In dem in Figur 1 gezeigten Ausführungsbeispiel ist die SPS 1 mittels eines übergeordneten Busses 2, der in dem hier gezeigten Ausführungsbeispiel ein Feldbus sein kann, mit einem Lokalbusmaster 3 eines untergeordneten Lokalbussystems verbunden. An den übergeordneten Bus 2 können aber nicht nur wie in dem hier gezeigten Ausführungsbeispiel ein Lokalbusmaster 3 eines Lokalbusses angeschlossen werden, sondern auch andere beliebige Teilnehmer - hier nicht gezeigt -, die zur Kommunikation mit der SPS 1 ausgestaltet sind.

Der übergeordnete Bus 2 ist in dem hier gezeigten Ausführungsbeispiel mit dem Lokalbusmaster 3 verbunden. Hierzu weist der Lokalbusmaster 3 eine erste Schnittstelle 4 auf, die derart ausgelegt ist, dass diese mit dem übergeordneten Bus 2 verbunden werden kann. Die Schnittstelle 4 kann hierzu beispielsweise eine Aufnahme in Form einer Buchse aufweisen und der übergeordnete Bus 2 kann einen Stecker aufweisen, der von der Buchse aufgenommen werden kann. Dabei können der Stecker und die Buchse zum Beispiel ein Modularstecker und eine Modularbuchse sein, d.h. jede Ader des übergeordneten Busses 2 wird mit einer Verbindung in der Modularbuchse elektrisch oder optisch verbunden. Dem Fachmann sind aber auch andere Möglichkeiten bekannt, wie eine Schnittstelle 4 auszulegen ist, so dass der Lokalbusmaster 3 elektrisch oder optisch mit dem übergeordneten Bus 2 verbunden werden kann. Dem Fachmann sind dabei, Schraub-, Dreh-, Klick- oder Steckverbindungen bekannt, mit deren Hilfe sich eine elektrische oder optische Verbindung herstellen lassen kann. Dabei wird zumeist ein männlicher Stecker von einem weiblichen Gegenstück aufgenommen. Diese Aufnahme stellt zumeist nicht nur die elektrische oder optische Verbindung her, sondern sorgt auch dafür, dass die beiden Teile mechanisch gekoppelt werden und nur mit Aufwendung einer bestimmten Kraft wieder voneinander gelöst werden können. Es ist aber auch denkbar, dass der übergeordnete Bus 2 fest mit der Schnittstelle 4 verdrahtet ist.

Der Lokalbusmaster 3 in dem hier gezeigten Ausführungsbeispiel weist eine weitere zweite Schnittstelle auf, um den Lokalbusmaster 3 mit dem Lokalbus zu verbinden. An den Lokalbus sind Datenbusteilnehmer 7a, 7b, ..., 7n angeschlossen bzw. bilden diesen. Der Lokalbus ist vorteilhafterweise derart ausgebildet, dass ein vom Lokalbusmaster 3 gesendetes Datenpaket durch alle mit dem Lokalbus verbundenen Datenbusteilnehmer 7a, 7b, ..., 7n und an den Lokalbusmaster 3 zurück übertragen wird. Dabei empfängt ein Datenbusteilnehmer 7a, 7b, ..., 7n von seinem vorgelagerten Datenbusteilnehmer 7a, 7b, ..., 7n immer nur einen Teil des Datenpakets. Nach einer Zeitspanne in der die in diesem Teil enthaltenen Daten vom Datenbusteilnehmer 7a, 7b, ..., 7n verarbeitet werden können, wird der Teil an den nachgelagerten Datenbusteilnehmer 7a, 7b, ..., 7n weitergeleitet und gleichzeitig wird von dem vorgelagerten Datenbusteilnehmer 7a, 7b, ..., 7n ein neuer Teil des Datenpakets empfangen. Auf diese Weise passieren alle Teile des Datenpakets sequentiell alle Datenbusteilnehmer 7a, 7b, ..., 7n. Der Lokalbus ist vorteilhafterweise in einer ringförmigen Struktur ausgebildet. Derartige Lokalbusse können auch als Ringbus 6 bezeichnet werden. Der Lokalbus kann alternativ auch strangförmig oder sternförmig oder aus einer Kombination oder Mischform der zuvor genannten ausgebildet sein. Das Senden und Empfangen der Datenpakete wird dabei über die zweite Schnittstelle des Lokalbusmasters 3 bewerkstelligt. In dem hier gezeigten Ausführungsbeispiel teilt sich die zweite Schnittstelle in einen ersten Teil 5a und einen zweiten Teil 5b auf. Der erste Teil 5a der zweiten Schnittstelle stellt die Abwärtsverbindung im Ringbus 6 her und der zweite Teil 5b der zweiten Schnittstelle stellt die Aufwärtsverbindung im Ringbus 6 her.

Der Ringbus 6, dessen Datensenderichtung mit Pfeilen in dem in Figur 1 gezeigten Ausführungsbespiel gezeigt ist, weist in dem hier gezeigten Ausführungsbeispiel die Datenbusteilnehmer 7a, 7b, ..., 7n auf. Diese Datenbusteilnehmer 7a, 7b, ..., 7n weisen in dem hier gezeigten Ausführungsbeispiel jeweils eine Schnittstelle 8 auf, um Daten von einem vorgelagerten oder vorangehenden Datenbusteilnehmer 7a, 7b, ..., 7n zu empfangen. Im Fall von Datenbusteilnehmer 7a, empfängt dieser über die Schnittstelle 8 Daten von dem vorgelagerten Lokalbusmaster 3. Des Weiteren weisen die Datenbusteilnehmer 7a, 7b, ..., 7n in dem hier gezeigten Ausführungsbeispiel jeweils eine Schnittstelle 9 auf, um Daten an einen nachgelagerten oder nachfolgenden Datenbusteilnehmer 7a, 7b, ..., 7n weiterzuleiten. In Fall von Datenbusteilnehmer 7a sendet dieser Daten an den nachgelagerten Datenbusteilnehmer 7b über die Schnittstelle 9. Die Schnittstellen 8 und 9 dienen dabei zum Propagieren von Daten in Abwärtsrichtung des Ringbusses 6, d.h. von dem Lokalbusmaster 3 weg. Des Weiteren weisen die Datenbusteilnehmer 7a, 7b, ..., 7n in diesem Ausführungsbeispiel auch Schnittstellen 10 und 11 auf, zum Propagieren von Daten in Aufwärtsrichtung des Ringbusses 6, d.h. zum Lokalbusmaster 3 hin. Im Fall des Datenbusteilnehmers 7a ist Schnittstelle 10 dabei dazu ausgelegt, Daten von dem nachgelagerten oder nachfolgenden Datenbusteilnehmer 7b zu empfangen und Schnittstelle 11 ist dazu ausgelegt, Daten an den vorgelagerten oder vorangehenden Datenbusteilnehmer, hier den Lokalbusmaster 3, weiterzuleiten. Es kann also auch gesagt werden, dass die Schnittstellen 9 und 11 Senderschnittstellen sind, wohingegen die Schnittstellen 8 und 10 Empfängerschnittstellen sind.

In dem hier gezeigten Ausführungsbeispiel werden die Verbindungen der Schnittstellen und der SPS 1 beziehungsweise den Datenbusteilnehmern 7a, 7b, ..., 7n mit Hilfe von Kabeln oder Leiterplatten zur direkten oder indirekten Kontaktierung mittels elektrischen Kontakten realisiert. Eine andere Alternative ist, dass die einzelnen Verbindungen kabellos hergestellt werden, und die Schnittstellen die notwendigen Umsetzungen auf die verwendeten Funkstandards bereitstellen.

Auch wenn der Lokalbusmaster 3 und die einzelnen Datenbusteilnehmer 7a, 7b, ..., 7n in dem hier gezeigten Ausführungsbeispiel voneinander beabstandet gezeigt sind, der Lokalbusmaster 3 also dezentral angeordnet ist von den Datenbusteilnehmern 7a, 7b, ..., 7n, ist dem Fachmann bewusst, dass die Datenbusteilnehmer 7a, 7b, ..., 7n und der Lokalbusmaster 3 - der auch einen Datenbusteilnehmer des Ringbusses 6 darstellt - auch direkt miteinander verbunden werden können. Dabei können beispielsweise Kontakte des einen Datenbusteilnehmers in entsprechende Aufnahmen oder Aufnahmekontakte eines direkt benachbarten Datenbusteilnehmers greifen, um so eine elektrische Verbindung zwischen den Datenbusteilnehmern herzustellen, damit Daten in Abwärts- und Aufwärtsrichtung gesendet werden können. Beispielsweise können die Datenbusteilnehmer 7a, 7b, ...,7n an der dem Master abgewandten Seite Aufnahmen und an der dem Master zugewandten Seite Kontakte aufweisen. Werden die Datenbusteilnehmer 7a, 7b, ...,7n dann entsprechend aneinandergereiht, so greifen die Kontakte des einen Datenbusteilnehmers 7a, 7b, ..., 7n jeweils in die Aufnahmen des anderen Datenbusteilnehmers 7a, 7b, ..., 7n ein und es kann eine elektrische Verbindung erzeugt werden. Der Lokalbusmaster 3 weist dann entsprechend Kontakte an der Seite auf, die in die Aufnahmen des ersten Datenbusteilnehmers 7a greifen, um so zwischen den Schnittstellen 5a und 8 beziehungsweise den Schnittstellen 5b und 11 eine elektrische Verbindung zu erzeugen. Dem Fachmann sind aber auch noch andere Möglichkeiten, z.B. Druckkontakte, Messer- und Gabelkontakte bekannt, wie zwei direkt aneinander angeordnete Datenbusteilnehmer 7a, 7b, ..., 7n eine elektrische oder optische Verbindung herstellen können.

Im Falle dessen, dass die Datenbusteilnehmer 7a, 7b, ..., 7n und der Lokalbusmaster 3 direkt miteinander verbunden werden sollen, können diese auch mechanische Aufnahmen oder mechanische Befestigungsmittel aufweisen, mit denen die einzelnen Datenbusteilnehmer 7a, 7b, ..., 7n und der Lokalbusmaster 3 miteinander verbunden werden können. Hierbei kann zum Beispiel ein Datenbusteilnehmer 7a, 7b, ..., 7n an einer Seite einen Vorsprung aufweisen und an der anderen Seite eine Hinterschneidung aufweisen. Werden die Datenbusteilnehmer 7a, 7b, ..., 7n dann aneinandergereiht, so greift ein Vorsprung in eine Hinterschneidung des anderen Datenbusteilnehmers 7a, 7b, ..., 7n ein, so dass eine mechanische Kopplung entsteht. Zur einfachen Aneinanderreihung der Datenbusteilnehmer 7a, 7b, ..., 7n können diese auch auf einer gemeinsamen Aufnahme, zum Beispiel einer Hutschiene angeordnet werden. Zur Befestigung auf der Hutschiene können die Datenbusteilnehmer 7a, 7b, ..., 7n entsprechende Befestigungsmittel aufweisen. Alternativ oder zusätzlich können die Datenbusteilnehmer 7a, 7b, ..., 7n auch beispielsweise lösbar verbindbare Befestigungsmittel aufweisen, mit denen die Datenbusteilnehmer 7a, 7b, ..., 7n entweder an der Hutschiene oder an einer anderen Aufnahme befestigt werden können. Dazu kann das lösbar verbindbare Befestigungsmittel austauschbar sein und ein entsprechendes Befestigungsmittel für die gewünschte Aufnahme kann mit den Datenbusteilnehmern 7a, 7b, ..., 7n verbunden werden, so dass diese an der gewünschten Aufnahme befestigt werden können.

Des Weiteren weisen die Datenbusteilnehmer 7a, 7b, ..., 7n in dem in Figur 1 gezeigten Ausführungsbeispiel auch eine Verarbeitungseinheit 12 auf. Diese Verarbeitungseinheit 12 kann eine arithmetische-logische Einheit sein oder eine andere Art von Rechenwerk sein mit dessen Hilfe Daten verarbeitet werden können. Die Verarbeitungseinheit 12 ist vorzugsweise ein integraler Bestandteil des Datenbusteilnehmers 7a, 7b, ..., 7n, um eine besonders schnelle und zeitlich synchronisierte Bearbeitung der Daten sicherzustellen.

Die Verarbeitungseinheit 12 kann auch als Gesamtschaltung des Datenbusteilnehmers bezeichnet werden. D.h. die Verarbeitungseinrichtung 12 empfängt Daten über die Eingänge 8 und 10 und gibt Daten auf den Ausgängen 9 und 11 aus. Des Weiteren kann die Verarbeitungseinrichtung 12 Daten von den Ein-/und Ausgängen 13 und 14 empfangen beziehungsweise ausgeben. Weiterhin hat die Verarbeitungseinheit 12 Zugriff auf einen Speicher - hier nicht gezeigt - des Datenbusteilnehmers 7a, 7b, ..., 7n in dem beispielsweise Daten, Prozessdaten, oder Instruktionslisten gespeichert sind.

Die Verarbeitungseinheit 12 kann dazu ausgelegt sein, empfangene Daten zu verarbeiten und Daten auszugeben. Empfangen werden können zu verarbeitende Daten entweder von einem vorgelagerten Datenbusteilnehmer oder von Eingängen 13 des Datenbusteilnehmers 7a, 7b, ..., 7n. Dabei können die Eingänge 13 des Datenbusteilnehmers 7a, 7b, ..., 7n mit Sensoren 15 verbunden sein, die zum Beispiel Messdaten, Zustandsdaten, etc. senden. Ausgegeben werden können verarbeitete Daten entweder an einen nachgelagerten Datenbusteilnehmer oder an Ausgängen 14 des Datenbusteilnehmers 7a, 7b, ..., 7n. Dabei können die Ausgänge 14 des Datenbusteilnehmers 7a, 7b, ..., 7n mit Aktoren 16 verbunden sein, die zum Beispiel mit Hilfe der an sie gerichteten Daten eine bestimmte Aktion durchführen.

Einfachheitshalber sind in dem hier gezeigten Ausführungsbeispiel die Datenbusteilnehmer 7a, 7b, ..., 7n nur mit einem Eingang 13 und einem Ausgang 14 gezeigt und auch nur Datenbusteilnehmer 7b ist mit Sensor 15 und Aktor 16 verbunden. Es ist dem Fachmann aber bewusst, dass die Datenbusteilnehmer 7a, 7b, ..., 7n eine Vielzahl von Ein- und Ausgängen 13 und 14 aufweisen können, und mit einer Vielzahl von unterschiedlichen Sensoren 15 und Aktoren 16 verbunden werden können. Dabei ist das die Sensoren 15 charakterisierende Merkmal, dass die Sensoren 15 Daten oder Signale aufnehmen und an den Datenbusteilnehmer 7a, 7b, ..., 7n senden, wohingegen Aktoren 16 Daten oder Signale von den Datenbusteilnehmern 7a, 7b, ..., 7n empfangen und basierend auf diesen Daten oder Signalen eine Aktion ausführen.

Alternativ können die Schnittstellen 8, 9, 10 und 11 in einer Moduleinheit integriert sein und die Datenbusteilnehmer 7a, 7b, 7n auf diese Moduleinheit aufgesteckt werden können. Die Moduleinheiten können auch als Basiselemente des Ringbusses 6 bezeichnet werden. Die Ringbusinfrastruktur wird dabei durch die Moduleinheiten aufgebaut und die Datenbusteilnehmer 7a, 7b, ..., 7n sind auswechselbar, so dass der Ringbus 6 mit beliebigen Datenbusteilnehmern 7a, 7b, ..., 7n aufgebaut werden kann. Mit Hilfe der Moduleinheiten ist auch sichergestellt, dass auch wenn ein Datenbusteilnehmer 7a, 7b, ..., 7n entfernt wird, die Kommunikation zwischen den restlichen Datenbusteilnehmern 7a, 7b, ..., 7n nicht unterbrochen wird, weil die Kommunikation über die im Ringbus verbleibende Moduleinheit geschieht.

Die in diesem Ausführungsbeispiel gezeigten Datenbusteilnehmer 7a, 7b, ..., 7n werden auf Grund ihrer Ein- und Ausgänge 13, 14, die mit Sensoren 15 beziehungsweise Aktoren 16 verbunden werden können, auch häufig als E/A-Module bezeichnet. Auch wenn die Datenbusteilnehmer 7a, 7b, ..., 7n in dem hier gezeigten Ausführungsbeispiel als räumlich getrennt von den Sensoren 15 beziehungsweise Aktoren 16 dargestellt sind, so können die Sensoren 15 beziehungsweise Aktoren 16 auch in dem E/A-Modul integriert sein.

Die Datenbusteilnehmer 7a, 7b, ..., 7n dienen zum Steuern oder Überwachen eines Prozesses, insbesondere durch eine Ausgabe von Steuersignalen z.B. an Aktoren 16 und/oder durch einen Empfang von Messsignalen z.B. von Sensoren 15. Die Datenbusteilnehmer 7a, 7b, ..., 7n setzen die Steuersignale und/oder Messsignale in Prozessdaten für den Lokalbus 6 um oder umgekehrt.

Der in dem hier gezeigten Ausführungsbeispiel gezeigte Ringbus 6 basiert auf einer Zyklusrahmenkommunikation. Ein Zyklusrahmen kann dabei beispielsweise als ein wiederkehrendes (zyklisches) vorzugsweise äquidistantes Zeitintervall, in dem Daten auf dem Ringbus 6 übertragbar sind, definiert werden. Der Zyklusrahmen weist beispielsweise zumindest eine Startkennung (SOC) und einen Zeitbereich zur Übertragung von Daten auf. Mehrere Startkennungen (SOC) aufeinander folgender Zyklusrahmen sind dabei vorteilhafterweise in einem zeitlich äquidistanten Abstand zueinander. Der genannte Zeitbereich ist für die Übertragung der Daten vorgesehen, die innerhalb des Zyklusrahmens in Form von Datenpaketen übertragen werden können. Die Startkennung (SOC) und die Datenpakete werden über den Ringbus 6 übertragen und durchlaufen alle Datenbusteilnehmer 7a, 7b, ..., 7n. Vorteilhafterweise wird der Zyklusrahmen durch den Lokalbusmaster 3 im Ringbus 6 initiiert. Die Startkennung (SOC) ist separat, also als eigenständiges Symbol, übertragbar oder vorteilhafterweise in einem Startdatenpaket (SOC-Paket) enthalten.

Innerhalb des Zeitbereichs des Zyklusrahmens werden keine, ein oder mehrere Datenpakete übertragen. Vorteilhafterweise werden in einem Zyklusrahmen Leerlauf-Daten (Idle-Data) eingefügt, insbesondere angrenzend an zumindest ein Datenpaket. Vorteilhafterweise bewirkt die Übertragung der Datenpakete und/oder der Leerlauf-Daten ein ununterbrochenes Signal auf dem Ringbus 6. Das Signal ermöglicht es den Datenbusteilnehmern 7a, 7b, ..., 7n, sich auf dieses zeitlich zu synchronisieren. Vorteilhafterweise weist der Zyklusrahmen zusätzlich einen Trailer auf. Der Trailer hat eine variable Länge und folgt auf den Zeitbereich zur Datenübertragung vorzugsweise bis zur folgenden Startkennung (SOC) des nächsten Zyklusrahmens. Vorteilhafterweise weist der Trailer Leerlauf-Daten auf.

Datenpakete werden innerhalb der Zyklusrahmen von dem Lokalbusmaster 3 gesendet. Dabei sendet der Lokalbusmaster 3 beispielsweise in Abwärtsrichtung an den ersten Datenbusteilnehmer 7a des Ringbusses 6 Teile des Datenpakets. Der erste Datenbusteilnehmer 7a empfängt einen ersten Teil des Datenpakets über die Schnittstelle 8. Ein derartiger Teil des Datenpakets wird im Folgenden auch als Stück oder Einheit bezeichnet. Der Datenbusteilnehmer 7a, 7b, ..., 7n führt dann eine Verarbeitung des Teils aus, und leitet den Teil dann an den nächsten Datenbusteilnehmer 7a, 7b, ..., 7n über Schnittstelle 9 weiter, vorzugsweise gleichzeitig empfängt der erste Datenbusteilnehmer 7a, 7b, ..., 7n einen zweiten Teil des Datenpakets usw. Die Größe der Teile des Datenpakets, also die Stückelung des Datenpakets, hängt dabei von der Aufnahmekapazität der Datenbusteilnehmer 7a, 7b, ..., 7n ab, beispielsweise können zur Verarbeitung gleichzeitig eine feste Anzahl von Bits, beispielsweise nur 8 Bits des Datenpakets am Datenbusteilnehmer 7a, 7b, ..., 7n vorliegen. Sind in dem Teil des Datenpakets Prozessdaten enthalten, so kann der Datenbusteilnehmer 7a, 7b, ..., 7n diese entsprechend seiner Instruktionsliste verarbeiten. Anschließend wird dieser Teil (diese 8 Bit) des Datenpakets von der Schnittstelle 9 an den nächsten Datenbusteilnehmer 7a, 7b, ..., 7n, in dem hier gezeigten Ausführungsbeispiel Datenbusteilnehmer 7b, weitergegeben. Der Datenbusteilnehmer 7b hat wiederum eine eigene Instruktionsliste zur Bearbeitung dieses Teils der Prozessdaten, wobei sich die Instruktionslisten der Datenbusteilnehmer 7a und 7b unterscheiden können. Die Zeitgebung bezüglich der Verarbeitungszeit kann sich dabei nach einer von dem Lokalbusmaster 3 vorgegebenen Zeitgebung richten. Dabei können interne Taktgeber der Datenbusteilnehmer 7a, 7b, ..., 7n mit der Zeitgebung des Lokalbusmasters 3 synchronisiert sein.

Die Datenpakete eines Zyklusrahmens durchlaufen dementsprechend einheitenweise, stückchenweise, oder Teile weise, zum Beispiel in Teilen oder Symbolen von 8 Bits, die Datenbusteilnehmer 7a, 7b, ..., 7n. Der Teil des Datenpakets, welcher vom letzten Datenbusteilnehmer, in dem hier gezeigten Ausführungsbeispiel Datenbusteilnehmer 7n, verarbeitet worden ist, durchläuft dann in Aufwärtsrichtung den Ringbus 6, so dass die Teile ausgehend von dem letzten Datenbusteilnehmer 7n wieder in Richtung Lokalbusmaster 3 durch alle Datenbusteilnehmer 7a, 7b, ..., 7n aufwärts gesendet werden. Hierzu weist der letzte Datenbusteilnehmer 7n entweder eine schaltbare Brücke auf, die die Schnittstelle 9 mit der Schnittstelle 10 verbindet oder an den letzten Datenbusteilnehmer 7n wird eine schaltbare Brücke - hier nicht gezeigt - angeschlossen, die die Funktion übernimmt die Teile des Zyklusrahmens von der Schnittstelle 9 auf die Schnittstelle 10 zu leiten. Alternativ kann die Schnittstelle 10 des Datenbusteilnehmers 7n auch mit Hilfe einer Bypassleitung - hier nicht gezeigt - direkt mit der Schnittstelle 5b des Lokalbusmasters 3 verbunden werden.

In der Aufwärtsrichtung können die Einheiten des Zyklusrahmens beziehungsweise der Datenpakete, wie in dem hier gezeigten Ausführungsbeispiel durch die einzelnen Datenbusteilnehmer 7a, 7b, ..., 7n zurück an den Lokalbusmaster 3 geschleift werden, ohne dass eine weitere Verarbeitung stattfindet. Es ist aber auch denkbar, dass in der Aufwärtsrichtung erneut eine Verarbeitung der Einheiten stattfindet, so dass die Einheiten zweimal verarbeitet werden kann, einmal auf der Abwärtsrichtung zum letzten Datenbusteilnehmer 7n und einmal in Aufwärtsrichtung zum Lokalbusmaster 3. Beispielsweise kann in Aufwärtsrichtung eine Verarbeitung durch Signalauffrischung und/oder Phasenschiebung erfolgen.

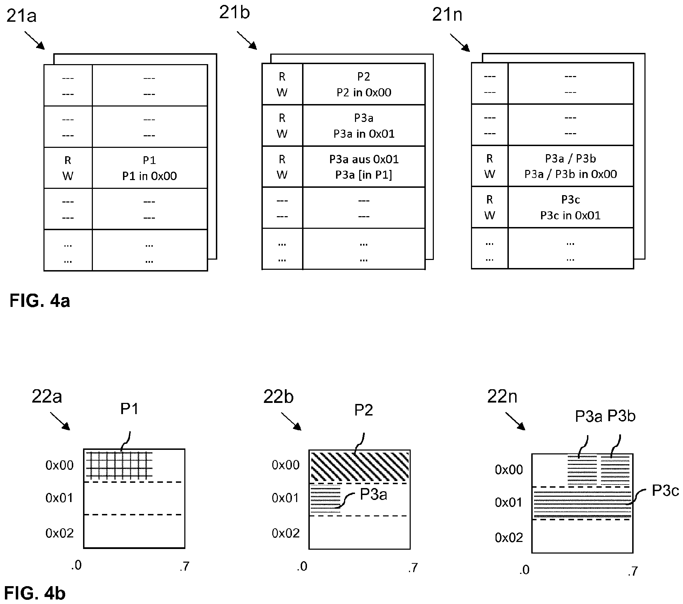

Die Verarbeitung der Datenpakete wird mit Hilfe von Instruktionslisten - wie beispielhaft in Figur 4a gezeigt - durchgeführt, wobei die Instruktionslisten Sätze von Instruktionen beinhalten, die von der Verarbeitungseinheit 12 der Datenbusteilnehmer 7a, 7b, ..., 7n ausgeführt werden können. Die Instruktionslisten selbst können den einzelnen Datenbusteilnehmern 7a, 7b, ..., 7n in einer Initialisierungsphase vom Lokalbusmaster 3 zugesandt werden. Die Instruktionslisten weisen dabei Sätze von Instruktionen auf, die die von den Datenbusteilnehmern 7a, 7b, ..., 7n durchzuführende Verarbeitung und Vorverarbeitung definieren. Mit Hilfe der Instruktionslisten kann die Verarbeitung von Prozessdaten auf mehrere Datenbusteilnehmer 7a, 7b, ..., 7n verteilt werden.

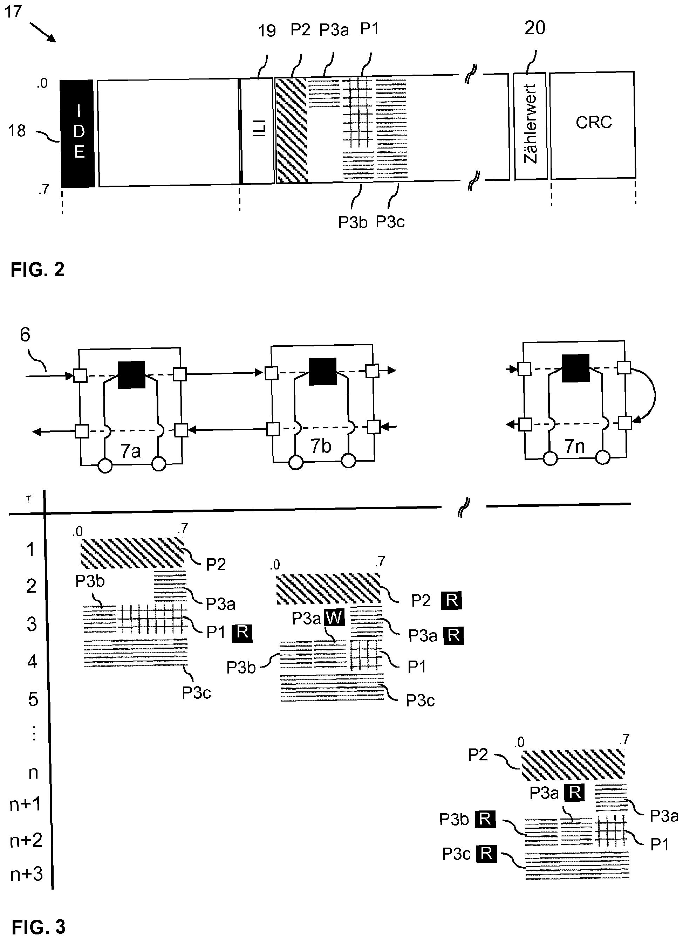

Ein Ausführungsbeispiel dieser verteilten Verarbeitung von Prozessdaten wird nachfolgend anhand der Figuren 2 bis 4 beschrieben. Dabei ist das beschriebene Ausführungsbeispiel nur exemplarisch zu verstehen und dem Fachmann ist bewusst, dass von diesem Ausführungsbeispiel auch abgewichen werden kann, ohne vom Grundgedanken der Erfindung abzuweichen.

Figur 2 zeigt eine schematische Darstellung eines von einem Lokalbusmaster 3 erzeugten Datenpaket 17 mit Prozessdaten P1, P2, P3. Das gezeigte Datenpaket 17 weist einen allgemeinen Kopfteil, einem Informationsteil sowie einem Prüfsummenteil (CRC-Wert) auf.

Der Kopfteil beinhaltet ein Feld 18, welches ein eindeutiges nur einmal auftretendes Bitmuster IDE enthält, welches auch als Codewort oder Kennung bezeichnet werden kann. Die Anzahl und die Ausgestaltung von eindeutigen Bitmustern beziehungsweise Codewörtern hängen ab von der auf dem Ringbus 6 verwendeten Kodierung. Alternativ oder zusätzlich können aber auch spezielle Bitmuster oder Codewörter in dem verwendeten Busprotokoll definiert werden. Es ist dabei nur von Bedeutung, dass die Datenbusteilnehmer 7a, 7b, ..., 7n eineindeutig aus dem Bitmuster beziehungsweise Codewort des Feldes 18 erkennen können, um welche Art von Datenpaket 17 es sich handelt. In dem hier gezeigten Ausführungsbeispiel haben die Datenbusteilnehmer 7a, 7b, ..., 7n Kenntnis darüber, dass wenn ein Feld 18 mit einem Bitmuster IDE empfangen wird, dass es sich um ein Datenpaket 17 handelt, welches Prozessdaten P1, P2, P3 trägt.

Der Kopfteil kann auch noch weitere Informationen beinhalten, die beispielsweise anzeigen, ob sich das Datenpaket 17 in Abwärtsrichtung oder Aufwärtsrichtung bewegt. Hierzu kann beispielsweise der letzte Datenbusteilnehmer 7n in den Kopfteil eine Information schreiben, dass das Datenpaket 17 bereits diesen Datenbusteilnehmer 7n passiert hat und zurückgesendet wurde in Richtung Lokalbusmaster 3. Des Weiteren kann der Kopfteil auch noch eine Information über die Länge des Datenpakets 17 enthalten, so dass die Datenbusteilnehmer 7a, 7b, ..., 7n die Integrität des Datenpakets 17 überprüfen können beziehungsweise Kenntnis darüber haben, wie viele Teile des Datenpakets 17 noch vom Datenbusteilnehmer 7a, 7b, ..., 7n empfangen werden, bevor ein neues Datenpaket 17 startet. Dem Fachmann sind aber auch noch andere Felder bekannt, die in einen Kopfteil eines Datenpakets 17 geschrieben werden können, die zur Steuerung oder Fehlererkennung durch die Datenbusteilnehmer 7a, 7b, ..., 7n genutzt werden können.

Der Informationsteil des Datenpakets 17 kann als erstes einen Instruktionslistenindexfeld 19, ILI, aufweisen welches angibt, welche Instruktionsliste die Datenbusteilnehmer 7a, 7b, ..., 7n verwenden sollen. Beispielsweise kann im Normalbetrieb des Ringbusses 6 vorgesehen sein, dass alle Datenbusteilnehmer 7a, 7b, ..., 7n ihre erste Instruktionsliste verwenden, wohingegen im Fehlerfall die zweite Instruktionsliste verwendet werden soll. Dabei kann der Instruktionslistenindex auf den Speicherplatz der im Datenbusteilnehmer 7a, 7b, ..., 7n gespeicherten Instruktionsliste direkt hinweisen, oder der Instruktionslistenindex kann einen Wert aufweisen, mit dem der Datenbusteilnehmer 7a, 7b, ..., 7n beispielsweise über eine Umsetzungstabelle die entsprechende Instruktionsliste auffinden kann. Der Informationsteil weist des Weiteren die eigentlichen Prozessdaten P1, P2 und P3 auf. Diese Prozessdaten P1, P2, P3 sind in dem hier gezeigten Ausführungsbeispiel mit unterschiedlichen Mustern gezeigt. In dem hier gezeigten Ausführungsbeispiel sind die Prozessdaten P1 für den Datenbusteilnehmer 7a im Ringbus 6 bestimmt, die Prozessdaten P2 sind für den Datenbusteilnehmer 7b im Ringbus 6 bestimmt und die Prozessdaten P3 sind für den Datenbusteilnehmer 7n im Ringbus 6 bestimmt. Dabei sind die Prozessdaten P3 in drei Teile P3a, P3b, und P3c geteilt.

Die Positionierung der Prozessdaten P1, P2, P3 in dem Informationsteil des Datenpakets 17 ist vorgegeben vom Lokalbusmaster 3. Beispielsweise kopiert der Lokalbusmaster 3 die von der Steuerung 1 enthaltenen Prozessdaten P1, P2, P3 ohne Reihenfolgenänderung in das Datenpaket 17. D.h. der Lokalbusmaster 3 führt zur Beschleunigung der Umsetzung des von der Steuerung 1 enthaltenen Datenstroms in Datenpakete 17 keine Änderung der Reihenfolge der Prozessdaten P1, P2, P3 durch.

In dem hier gezeigten Ausführungsbeispiel ist das Datenpaket 17 in Symbole von jeweils 8 Bit eingeteilt. Das Datenpaket 17 wird auch in dieser Stückelung von den Datenbusteilnehmer 7a, 7b, ..., 7n empfangen und verarbeitet. D.h. als erstes sendet der Lokalbusmaster 3 das Symbol beziehungsweise Feld IDE 18 an den ersten Datenbusteilnehmer 7a, nach einer vorher bestimmten Zeit, sendet der Lokalbusmaster 3 ein weiteres Symbol des Kopfteiles des Datenpakets 17 an den Datenbusteilnehmer 7a, dieser wiederum sendet gleichzeitig das Symbol beziehungsweise Feld IDE 18 an den Datenbusteilnehmer 7b. In dieser Weise durchlaufen alle Teile des Datenpakets 17 die jeweiligen Datenbusteilnehmer 7a, 7b, ..., 7n, wobei zu jeder gegebenen Zeit jeder Datenbusteilnehmer 7a, 7b, ..., 7n immer nur ein Stück beziehungsweise Teil des Datenpakets 17 vorhält und damit verarbeiten kann.

Des Weiteren weist das Datenpaket 17 im Informationsteil noch ein Feld 20 auf, welches als Zählerwert ausgestaltet sein kann, und welches von jedem Datenbusteilnehmer 7a, 7b, ..., 7n durch welchen dieser Teil des Datenpakets 17 bereits geleitet wurde inkrementiert oder dekrementiert werden kann. Der Zählerwert des Feldes 20 kann von dem Lokalbusmaster 3 verwendet werden, um zu überprüfen, ob das Datenpaket 17 alle Datenbusteilnehmer 7a, 7b, ..., 7n durchlaufen hat.

Das symbolweise Durchlaufen des Datenpakets 17 durch die Datenbusteilnehmer 7a, 7b, ..., 7n bedeutet für den Datenbusteilnehmer 7n beispielsweise, dass dieser zunächst in einem Symbol die Prozessdaten P3a empfängt, in einem weiteren Symbol die Prozessdaten P3b und in einem weiteren Symbol die Prozessdaten P3c. Wenn der Datenbusteilnehmer 7n nur mit den Prozessdaten P3a und P3b zusammen eine Ansteuerung, Regelung oder Verarbeitung durchführen kann, so muss der Datenbusteilnehmer 7n zunächst die Prozessdaten P3a zwischenspeichern bevor dann mit Empfang des weiteren Symbols auch die Prozessdaten P3b vorliegen. Wenn die Prozessdaten P3b vorliegen, muss der Datenbusteilnehmer 7n dann Rechenleistung und Arbeitstakte dafür aufwenden zunächst die zwischengespeicherten Prozessdaten P3a aus dem Speicher zu lesen, bevor eine Verarbeitung stattfinden kann.

Mit der erfindungsgemäßen Vorverarbeitung lässt sich dieser Mehraufwand *(engl.* Overhead) für den Datenbusteilnehmer 7n minimieren, wie in Figur 3 dargestellt, nämlich durch eine Vorverarbeitung der Prozessdaten P3a durch einen Datenbusteilnehmer 7a, 7b, der dem Datenbusteilnehmer 7n im Ringbus 6 vorgelagert ist.

Figur 3 zeigt schematisch in einem Zeitdiagramm, wie Symbole des Informationsteils des Datenpakts 17 - wie in Figur 2 dargestellt - die beispielhaften Datenbusteilnehmer 7a, 7b, ..., 7n des Ringbusses 6 durchlaufen und welche Verarbeitungsschritte oder Vorverarbeitungsschritte von den jeweiligen Datenbusteilnehmern 7a, 7b, ..., 7n ausgeführt werden.

Zur Zeit τ = 1 hat nur der Datenbusteilnehmer 7a die Prozessdaten P2 vom Lokalbusmaster 3 empfangen. In dem hier gezeigten Ausführungsbeispiel füllen die Prozessdaten P2 das gesamte Symbol des Datenpakets 17 aus. Mit diesen Prozessdaten P2 führt der Datenbusteilnehmer 7a allerdings keine Verarbeitung oder Vorverarbeitung durch. Es kann auch gesagt werden, dass diese Prozessdaten P2 nicht für den Datenbusteilnehmer 7a bestimmt sind. Der Datenbusteilnehmer 7a kann für diese Prozessdaten P2 entsprechend eine "SKIP" Instruktion oder für jedes Bit des Symbols eine "SKIP" Instruktion in seiner Instruktionsliste aufweisen, oder keine Instruktionen aufweisen. Die Prozessdaten P2 verbleiben aber dennoch eine vorher bestimmte Zeit am Datenbusteilnehmer 7a bevor der Datenbusteilnehmer 7a die Prozessdaten P2 an den Datenbusteilnehmer 7b weiterleitet. Dies gewährleistet ein deterministisches Verhalten des Ringbusses 6, also ein vorhersehbares zeitliches Verhalten des Ringbusses 6, weil jedes Symbol eine vorher bestimmte Zeit an den jeweiligen Datenbusteilnehmern 7a, 7b, ..., 7n verbleibt, wobei diese vorher bestimmte Zeit vorzugsweise bei allen Datenbusteilnehmern 7a, 7b, ..., 7n gleich ist und sich nach einer vorgegebenen Zeitgebung des Lokalbusmasters 3 richten kann. Beim Senden der Prozessdaten P2 an den Datenbusteilnehmer 7b zu τ = 2 empfängt der Datenbusteilnehmer 7a die Prozessdaten P3a in einem weiteren Symbol des Datenpakets 17. In dem hier gezeigten Ausführungsbeispiel entsprechen die Prozessdaten P3a oder das Prozessdatum P3a nur einem gewissen Teil des Symbols des Datenpakets 17. Beispielsweise kann das Prozessdatum P3a nur ein Bit in dem Symbol sein.

D.h. zu τ = 2 haben die Prozessdaten P2 den Datenbusteilnehmer 7a bereits durchlaufen und dieser hält momentan das Symbol mit den Prozessdaten P3a vor, wobei der Datenbusteilnehmer 7b die Prozessdaten P2 vorhält. Da diese Prozessdaten P2 für diesen Datenbusteilnehmer 7b bestimmt sind, liest dieser Datenbusteilnehmer 7b die Prozessdaten P2 und führt damit Steuerungen, Regelungen oder Verarbeitungen aus. Das Lesen der Prozessdaten P2 ist mit einem "R" *(engl.* Read) gekennzeichnet. Anschließend sendet der Datenbusteilnehmer 7b das die Prozessdaten P2 aufweisende Symbol des Datenpakets 17 weiter an den nachfolgenden Datenbusteilnehmer beispielsweise den Datenbusteilnehmer 7n.

Zu T = 3 hat der Datenbusteilnehmer 7a das nächste Symbol des Datenpakets 17 von dem Lokalbusmaster 3 empfangen. Dieses Symbol enthält die Prozessdaten P3b sowie die Prozessdaten P1. Da die Prozessdaten P1 für den Datenbusteilnehmer 7a bestimmt sind, liest dieser die Prozessdaten P1. Hierbei kann der Datenbusteilnehmer 7a entweder das ganze Symbol lesen, oder die Instruktionen in der Instruktionsliste können den Datenbusteilnehmer 7a anweisen den Teil des Symbols nicht zu lesen, in dem sich die Prozessdaten P3b befinden und anstelle dessen nur den Teil zu lesen, in dem die Prozessdaten P1 enthalten sind. Das Lesen der Prozessdaten P1 ist mit "R" gekennzeichnet. Diese Prozessdaten P1 können an dem Datenbusteilnehmer 7a eine Steuerung, Regelung bewirken, oder dieser Datenbusteilnehmer 7a kann eine Verarbeitung mit diesen Prozessdaten P1 durchführen. Zur gleichen Zeit hat der Datenbusteilnehmer 7b das Symbol mit den Prozessdaten P3a vorliegen. Dieses Symbol mit den Prozessdaten P3a wurde dem Datenbusteilnehmer 7b von dem Datenbusteilnehmer 7a gesendet. Auch wenn die Prozessdaten P3a nicht für den Datenbusteilnehmer 7b bestimmt sind, so kann dieser jedoch in seiner Instruktionsliste zumindest eine Instruktion für dieses Symbol aufweisen, die den Datenbusteilnehmer 7b dazu veranlasst, die Prozessdaten P3a oder das eine Prozessdatum P3a aus dem Symbol zu lesen und zu speichern. Das Lesen der Prozessdaten P3a ist mit "R" gekennzeichnet.

Zu τ = 4 hat der Datenbusteilnehmer 7a das nächste Symbol des Datenpakts 17 von dem Lokalbusmaster 3 empfangen. Dieses Symbol enthält die Prozessdaten P3c. Der Datenbusteilnehmer 7a führt mit diesen Prozessdaten P3c keine Verarbeitung aus, d.h. der Datenbusteilnehmer 7a kann für dieses Symbol eine entsprechende "SKIP" Instruktion oder für jedes Bit des Symbols eine entsprechende "SKIP" Instruktion in seiner Instruktionsliste aufweisen. Der Datenbusteilnehmer 7b hat zur gleichen Zeit das Symbol vom Datenbusteilnehmer 7a empfangen, welches die Prozessdaten P1 und P3b aufweist. Die Instruktionen des Datenbusteilnehmers 7b können diesen dazu veranlassen, die zur Zeit τ = 3 gelesenen Prozessdaten P3a nun in das momentan vorliegende Symbol zu schreiben. Das Schreiben ist mit "W" *(engl.* Write) gekennzeichnet. In dem hier gezeigten Ausführungsbeispiel werden die Prozessdaten P3a neben den Prozessdaten P3b in das Symbol geschrieben. Hierzu werden die Prozessdaten P1 überschrieben. Dies ist möglich, weil die Prozessdaten P1 bereits von dem Datenbusteilnehmer 7a gelesen wurden und diese nicht mehr benötigt werden. Es ist dem Fachmann aber auch klar, dass das Überschreiben von Prozessdaten durch bekannte Mechanismen verhindert werden kann. Es kann allerdings auch bereits bei der Erzeugung der Instruktionslisten implementiert werden, dass es zu keinen Überschreibungen von Prozessdaten kommt oder zumindest sichergestellt wird, dass nur nicht mehr benötigte Prozessdaten überschrieben werden. Nach dem die Prozessdaten P3a von dem Datenbusteilnehmer 7b in das Symbol geschrieben worden sind, wird dieses veränderte Symbol durch den Ringbus 6 geleitet.

Die Umspeicherung der Prozessdaten P3a durch den Datenbusteilnehmer 7b stellt eine erfindungsgemäße Vorverarbeitung dar. Dabei hat der Datenbusteilnehmer 7b, Prozessdaten verarbeitet, die nicht für diesen Datenbusteilnehmer 7b bestimmt sind, deren Umspeicherung aber einem nachgelagerten Datenbusteilnehmer, in dem hier gezeigten Ausführungsbeispiel dem Datenbusteilnehmer 7n, Arbeitstakte erspart, weil dieser keine Umspeicherung mehr durchführen muss. Dies wird in der Fortführung des Zeitdiagramms deutlich.

Zu τ = n empfängt der Datenbusteilnehmer 7n das erste Symbol des Datenpakets 17. Da dieses keine für diesen Datenbusteilnehmer 7n bestimmten Prozessdaten enthält kann der Datenbusteilnehmer 7n dieses Symbol überspringen. Die Instruktionsliste des Datenbusteilnehmers 7n kann also eine oder mehrere entsprechende "SKIP" Instruktionen aufweisen.

Zu τ = n+1 empfängt der Datenbusteilnehmer 7n ein weiteres Symbol des Datenpakets 17, nämlich das Symbol mit den Prozessdaten P3a. Diese Prozessdaten P3a werden aber von dem Datenbusteilnehmer 7n nicht gelesen, weil diese bereits von dem Datenbusteilnehmer 7b umgespeichert wurden in das folgende Symbol. D.h. der Datenbusteilnehmer 7n braucht seine ihm zur Verfügung stehenden Arbeitstakte zu τ = n+1 nicht nutzen, um die Prozessdaten P3a zu lesen, sondern der Datenbusteilnehmer 7n kann die freien Kapazitäten anderweitig nutzen, beispielsweise um Verarbeitungen durchzuführen oder Vorverarbeitungen für den Lokalbusmaster 3 durchzuführen, an den der Datenbusteilnehmer 7n die Symbole zurückleitet.

Zu τ = n+2 empfängt der Datenbusteilnehmer 7n dann das von dem Datenbusteilnehmer 7b geänderte Symbol des Datenpakets 17, in den die Prozessdaten P3a umgespeichert wurden. Aus diesem Symbol kann der Datenbusteilnehmer 7n dann die Prozessdaten P3a und P3b lesen. Das Lesen der Prozessdaten P3a und P3b ist mit "R" gekennzeichnet. Der Datenbusteilnehmer kann also in einem Schritt die Prozessdaten P3a und P3b lesen.

Zu τ = n+3 empfängt der Datenbusteilnehmer 7n dann ein weiteres Symbol des Datenpakets 17 aus dem der Datenbusteilnehmer 7n die Prozessdaten P3c lesen kann. Das Lesen ist mit "R" gekennzeichnet.

Figur 4a zeigt die Instruktionslisten 21a, 21b, 21n der Datenbusteilnehmer 7a, 7b, ..., 7n. In dem hier gezeigten Ausführungsbeispiel sind die Instruktionslisten 21a, 21b, 21n als Tabellen dargestellt. Jede Zeile der Tabellen enthält in dem hier gezeigten Ausführungsbeispiel zwei Instruktionen, die mit dem gerade am Datenbusteilnehmer 7a, 7b, ..., 7n anhängigen Symbol des Datenpakets 17 ausgeführt werden können. Dem Fachmann ist aber bewusst, dass auch wenn hier nur zwei Instruktionen für zwei Arbeitstakte exemplarisch gezeigt sind, auch eine andere Anzahl von Instruktionen pro Symbol ausgeführt werden können. Des Weiteren ist dem Fachmann klar, dass die Instruktionslisten 21a, 21b, 21n, auch für jedes Bit in dem Symbol eine eigene Instruktion aufweisen können. Nur der Einfachheit halber und zum Zwecke der Übersichtlichkeit wurde hier darauf verzichtet entsprechende Instruktionen für jedes Bit anzugeben.

Die erste Zeile der Instruktionsliste 21a des Datenbusteilnehmers 7a ist leer, was mit "---" gekennzeichnet ist. D.h. der Datenbusteilnehmer 7a führt mit dem ersten von diesem Datenbusteilnehmer 7a empfangenen Symbol des Datenpakets 17 keine Verarbeitung aus, weil keine Instruktion vorhanden ist. Anstelle von leeren Instruktionen kann die Instruktionsliste 21a an dieser Stelle auch "SKIP" Instruktionen aufweisen. Auch die zweite Zeile der Instruktionsliste 21a ist leer, d.h. auch mit dem zweiten von den Datenbusteilnehmer 7a empfangenen Symbol wird keine Verarbeitung ausgeführt. Die ersten zwei Symbole des Datenpakets 17 verbleiben somit nur eine vorherbestimmte Zeit am Datenbusteilnehmer 7a ohne dass eine Verarbeitung durchgeführt wird. Erst für das dritte empfangene Symbol weist die Instruktionsliste 21a eine Instruktion auf, nämlich Lese "R" und zwar die Prozessdaten P1. Dabei können die Prozessdaten P1 beispielsweise als ein Bit oder Bitbereich, zum Beispiel maximal 8 Bit entsprechend eines Symbols des Datenpakets 17 angegeben werden. Als zweite für dieses Symbol auszuführende Instruktion weist die Instruktionsliste 21a ein Schreibe "W" auf und zwar die gelesenen Prozessdaten P1 in den Speicher des Datenbusteilnehmers 7a und zwar an Speicheradresse 0x00. Ansonsten weist die Instruktionsliste 21a keine weiteren Instruktionen auf. D.h. der Datenbusteilnehmer 7a liest aus dem dritten von diesem Datenbusteilnehmer 7a empfangenen Symbol die Prozessdaten P1 und schreibt diese in seinen Speicher. Die weiteren in der Instruktionsliste 21 a gezeigten Zeilen sind leer, d.h. es werden keine weiteren Verarbeitungen ausgeführt. Es ist dem Fachmann aber bewusst, dass die hier gezeigten Instruktionen nur exemplarisch zu verstehen sind und auch andere Instruktionen von der Instruktionslisten 21a umfasst sein können.

Die Instruktionsliste 21b ist im Datenbusteilnehmer 7b gespeichert. Diese weist direkt in der ersten Zeile zwei Instruktionen auf, nämlich "R" für Lese und zwar die Prozessdaten P2 aus dem ersten Symbol, und "W" für Schreibe und zwar die gelesenen Prozessdaten P2 in den Speicher an Speicheradresse 0x00. Dem Fachmann ist bewusst, dass auch wenn hier die Prozessdaten der Einfachheit halber mit deren Bezugszeichen aus Figur 2 angegeben werden, die Instruktionen genau den Bitbereich im Symbol angeben können aus dem gelesen werden soll, oder anderweitig die Prozessdaten P2 identifizierbar sind. Nach Abarbeitung dieser zwei Instruktionen wird das Symbol weiter an den nachgelagerten Datenbusteilnehmer 7n gesendet und gleichzeitig wird ein neues Symbol vom vorgelagerten Datenbusteilnehmer 7a empfangen. Für dieses zweite Symbol weist die Instruktionsliste 21b des Datenbusteilnehmers 7b die Instruktionen "R" für Lese und zwar Prozessdaten P3a und "W" für Schreibe und zwar die gelesenen Prozessdaten P3a in den Speicher an Speicheradresse 0x01. Nach Abarbeitung dieser zwei Instruktionen wird das Symbol weiter an den nachgelagerten Datenbusteilnehmer 7n gesendet und gleichzeitig wird ein neues Symbol vom vorgelagerten Datenbusteilnehmer 7a empfangen. Für dieses Symbol enthält die Instruktionsliste wiederum zwei Instruktionen, nämlich "R" für Lese und zwar die Prozessdaten P3a aus dem Speicher an Speicheradresse 0x01 und "W" für Schreibe und zwar die gelesenen Prozessdaten P3a in das Symbol. Hierbei kann angegeben werden, wohin die Prozessdaten P3a in das Symbol geschrieben werden sollen. D.h. der Datenbusteilnehmer 7b führt eine Umspeicherung der Prozessdaten P3a in das Datenpaket 17 durch, nämlich von einem Symbol des Datenpakets 17 in ein anderes Symbol des Datenpakets 17. Hierfür speichert der Datenbusteilnehmer 7b die Prozessdaten P3a zunächst zwischen und schreibt diese in ein folgendes Symbol. Auch wenn hier die Umspeicherung in ein direkt folgendes Symbol gezeigt ist, so ist dem Fachmann bewusst, dass die Umspeicherung auch in ein beliebig folgendes Symbol stattfinden kann. Des Weiteren ist dem Fachmann auch klar, dass auch wenn hier nur eine Umspeicherung dargestellt ist, der Datenbusteilnehmer 7b beliebige im Rahmen der vorgegebenen Arbeitstakte möglichen Verarbeitungen mit den Prozessdaten P3a durchführen kann. Zu den Verarbeitungen gehören beispielsweise "AND" oder "OR"-Verknüpfungen der Prozessdaten P3a. Die weiteren Zeilen der Instruktionsliste sind leer, so dass der Datenbusteilnehmer 7b keine weitere Verarbeitung durchführt. Aber auch dies ist nur der Übersichtlichkeit des hier gezeigten Ausführungsbeispiels geschuldet und soll nicht als einschränkend verstanden werden.

Die Instruktionsliste 21n ist im Datenbusteilnehmer 7n gespeichert. Die ersten beiden Zeilen dieser Instruktionsliste 21n sind leer, so dass der Datenbusteilnehmer 7n für die ersten zwei Symbole des Datenpakets 17 keine Verarbeitung durchführt. Dennoch verbleiben diese zwei Symbole jeweils eine gewisse vorherbestimmte Zeit am Datenbusteilnehmer 7n bevor dieser die Symbole zurück an den Lokalbusmaster 3 sendet, entweder zurück durch die Datenbusteilnehmer 7a und 7b oder über eine Bypassleitung. Erst für das dritte vom Datenbusteilnehmer 7n empfangene Symbol weist die Instruktionsliste 21n entsprechende Instruktionen auf, nämlich "R" für Lese und zwar die Prozessdaten P3a und P3b. Diese Prozessdaten P3a und P3b können nunmehr aus dem einen Symbol gelesen werden, weil eine Umspeicherung der Prozessdaten P3a durch den Datenbusteilnehmer 7b in das entsprechende Symbol stattgefunden hat. Dies ermöglicht dem Datenbusteilnehmer 7n seine ihm zur Verfügung stehenden Arbeitstakte im zweiten Symbol, wo der Datenbusteilnehmer 7n ansonsten hätte die Prozessdaten P3a lesen müssen, anderweitig einzusetzen. Die gelesenen Prozessdaten P3a und P3b werden dann anschließend durch die Instruktion "W" also Schreibe in den Speicher geschrieben und zwar an Speicheradresse 0x00. Nach Abarbeitung dieser zwei Instruktionen wird das Symbol weiter an den Lokalbusmaster 3 gesendet und gleichzeitig wird ein neues Symbol vom vorgelagerten Datenbusteilnehmer 7b empfangen. Aus diesem Symbol liest der Datenbusteilnehmer 7n die Prozessdaten P3c durch die Instruktion "R" und scheibt diese Prozessdaten P3c in seinen Speicher an Speicheradresse 0x01 durch die Instruktion "W". Die Instruktionsliste 21n kann noch beliebige weitere Instruktionen beinhalten.

Dem Fachmann ist bewusst, dass auch wenn die Instruktionslisten 21a, 21b, 21n in dem hier gezeigten Ausführungsbeispiel als lesbare Tabellen angegeben sind, dass je nach Speichereinsatz bei den Datenbusteilnehmern 7a, 7b, ..., 7n, die Instruktionslisten 21a, 21b, 21n mehr oder weniger komplex ausgestaltet sein können, von Programmcode in einer höheren Programmiersprache bis hinunter zur Maschinensprache, d.h. Instruktionen, die von der Verarbeitungseinheit 12 der Datenbusteilnehmer 7a, 7b, ..., 7n direkt ausgeführt werden können. Dabei besteht der Maschinencode der Maschinensprache aus einer Folge von Bytes oder Wörtern, die sowohl Befehle als auch Daten repräsentieren können. Der Lokalbusmaster 3 kann beim Erzeugen der Instruktionslisten diese gleich in Maschinencode an die entsprechenden Datenbusteilnehmern 7a, 7b, ..., 7n senden, oder diesen die Instruktionslisten in Form von Programmcode zusenden, der von den Datenbusteilnehmern 7a, 7b, ..., 7n einzeln kompiliert wird und in Maschinensprache umgesetzt wird. Sendet der Lokalbusmaster 3 den Datenbusteilnehmern 7a, 7b, ..., 7n die Instruktionslisten gleich in Form von Maschinensprache, so hat dies den Vorteil, dass die Datenbusteilnehmer 7a, 7b, ..., 7n keine aufwendige Verarbeitungseinheit 12 bedürfen, weil diese nicht in der Lage sein müssen die erhaltenen Instruktionslisten zu kompilieren. Werden allerdings komplexere Datenbusteilnehmer 7a, 7b, ..., 7n eingesetzt, kann eine Kompilierung auf dem Datenbusteilnehmer 7a, 7b, ..., 7n selbst von Vorteil sein, weil in diesem Fall der Lokalbusmaster 3 keine Kenntnisse über die Hardware des Datenbusteilnehmer 7a, 7b, ..., 7n haben muss. Es ist dem Fachmann aber bewusst, dass die Komplexität der Instruktionslisten der Komplexität der Datenbusteilnehmer 7a, 7b, ..., 7n anpassbar ist.

Dem Fachmann ist auch klar, dass auch wenn hier nur einzelne Instruktionen angegeben worden sind, die sich immer auf ein ganzes Symbol bezogen haben, auch für jedes Prozessdatum in den Symbolen, also für jedes Bit, eine eigene Instruktion vorhanden sein kann. In diesem Fall kann auch davon gesprochen werden, dass ein bitgranulares Verarbeiten beziehungsweise Vorverarbeiten stattfindet.

Die durch die Instruktionslisten 21a, 21b und 21n gelesenen Prozessdaten P1, P2, P3 werden in den Speichern der Datenbusteilnehmer 7a, 7b, ..., 7n geschrieben und zwar an den durch die Instruktionen definierten Speicheradressen. Ein Beispiel der Speicher 22a, 22b, 22n der Datenbusteilnehmern 7a, 7b, 7n ist in Figur 4b gezeigt.

Die vom Datenbusteilnehmer 7a aus dem dritten Symbol des Datenpakets 17 gelesenen Prozessdaten P1 sind dabei an Speicheradresse 0x00 des Speichers 22a gespeichert.

Die vom Datenbusteilnehmer 7b aus dem ersten Symbol des Datenpakets 17 gelesenen Prozessdaten P2 sind dabei an Speicheradresse 0x00 des Speichers 22b gespeichert. Die aus dem zweiten Symbol des Datenpakets 17 gelesenen Prozessdaten P3a sind dabei an Speicheradresse 0x01 des Speichers 22b gespeichert. Nach dem die Prozessdaten P3a in das dritte Symbol des Datenpakets 17 geschrieben worden sind, kann diese Speicheradresse wieder freigegeben werden und die Prozessdaten P3a an dieser Speicheradresse gelöscht werden oder im Folgenden überschrieben werden.

Die vom Datenbusteilnehmer 7n aus dem dritten Symbol des Datenpakets 17 gelesenen Prozessdaten P3a, die zuvor vom Datenbusteilnehmer 7b an diese Stelle im Datenpaket 17 platziert wurden, sind dabei an Speicheradresse 0x00 des Speichers 22n gespeichert ebenso wie die Prozessdaten P3b. Die Prozessdaten P3c, die aus dem vierten Symbol des Datenpakets 17 gelesen wurden sind an Speicheradresse 0x01 des Speichers 22n gespeichert.

Es ist dem Fachmann bewusst, dass die hier gezeigten Speicherpositionen und gelesenen und geschriebenen Prozessdaten P1, P2, P3a, P3b, P3c nur exemplarisch zu verstehen sind.

Es ist dem Fachmann auch bewusst, dass wenn hier von Speichern gesprochen wird, das Speichern alle Arten des Vorhaltens umfassen kann. Es ist dabei nur von Bedeutung, dass die Datenbusteilnehmer 7a, 7b, ..., 7n Zugriff auf die gespeicherten Daten haben, d.h. beispielsweise Zugriff auf einen Speicher haben. Entsprechend können die Daten in dem Datenbusteilnehmer 7a, 7b, ..., 7n selbst gespeichert werden, beispielsweise in einem Speicher 22a, 22b, 22c der Datenbusteilnehmer 7a, 7b, ..., 7n, oder in einem mit den Datenbusteilnehmern 7a, 7b, ..., 7n einzeln oder gemeinsam verbundenen Speicher. Die Verbindung zwischen den Datenbusteilnehmern 7a, 7b, ..., 7n und dem Speicher oder den Speichern 22a, 22b, ..., 22n kann dabei kabelgebunden oder kabellos geschehen. Auch ist denkbar, dass die Speicher 22a, 22b, ..., 22n als ein Zusatzmodul ausgestaltet sind, welche mit den Datenbusteilnehmern verbunden werden.

### Bezugszeichenliste

- 1: speicherprogrammierbare Steuerung (SPS)
- 2: übergeordneter Bus
- 3: Lokalbusmaster
- 4: erste Schnittstelle
- 5a, b: zweite Schnittstelle
- 6: Ringbus
- 7a, b, n: Datenbusteilnehmer
- 8: erste Abwärtsdatenschnittstelle
- 9: zweite Abwärtsdatenschnittstelle
- 10: erste Aufwärtsdatenschnittstelle
- 11: zweite Aufwärtsdatenschnittstelle
- 12: Verarbeitungseinheit
- 13,14: Ein-/Ausgänge
- 15: Sensor
- 16: Aktor
- 17: Datenpaket mit Prozessdaten
- 18: IDE Codewort
- 19: Instruktionslistenindex
- P1, P2, P3: Prozessdaten
- 20: Zählerwert
- 21a, 21b, 21n: Instruktionslisten
- 22a, 22b, 22n: Speicher

## Patentansprüche

1. Ein Verfahren zur verteilten Verarbeitung von Prozessdaten (P1, P2, P3) in einem Lokalbus (6), mit einem Lokalbusmaster (3) und zumindest zwei Datenbusteilnehmern (7a, 7b, ..., 7n), das Verfahren aufweisend:
Senden eines Datenpakets (17) mit Prozessdaten (P1, P2, P3) von dem Lokalbusmaster (3) über den Lokalbus (6);
Empfangen des Datenpakets (17) an einem ersten Datenbusteilnehmer (7a, 7b, ..., 7n);
Vorverarbeiten zumindest eines Prozessdatums (P3) in dem Datenpaket (17) durch den ersten Datenbusteilnehmer (7a, 7b, ..., 7n) in Abhängigkeit der Arbeitstakte, die dem ersten Datenbusteilnehmer (7a, 7b, ..., 7n) zur Verfügung stehen, wobei das zumindest eine Prozessdatum (P3) für den zweiten Datenbusteilnehmer (7a, 7b, ..., 7n) bestimmt ist;
Senden des Datenpakets (17) mit dem zumindest einen vorverarbeiteten Prozessdatum (P3a) über den Lokalbus (6) an den zweiten Datenbusteilnehmer (7a, 7b, ..., 7n) durch den ersten Datenbusteilnehmer (7a, 7b, ..., 7n);
Empfangen des Datenpakets (17) mit dem zumindest einen vorverarbeiteten Prozessdatum (P3a) an dem zweiten Datenbusteilnehmer (7a, 7b, ..., 7n); und
Weiterverarbeiten des zumindest einen vorverarbeiteten Prozessdatums (P3a) durch den zweiten Datenbusteilnehmer (7a, 7b, ..., 7n).

2. Das Verfahren nach Anspruch 1, wobei das Vorverarbeiten aufweist:
Schreiben des zumindest einen Prozessdatums (P3a) in das Datenpaket (17).

3. Das Verfahren nach einem der vorhergehenden Ansprüche, wobei das Vorverarbeiten aufweist:
Lesen des zumindest einen Prozessdatums (P3) aus dem Datenpaket (17).

4. Das Verfahren nach einem der vorhergehenden Ansprüche,
wobei das Datenpaket (17) eine Vielzahl von Symbolen aufweist, wobei jedes Symbol eine Anzahl von Bits aufweist.

5. Das Verfahren nach Anspruch 4, wobei das Vorverarbeiten aufweist:
bitgranulares Vorverarbeiten eines empfangenen Symbols.

6. Das Verfahren nach Anspruch 5, wobei das bitgranulare Vorverarbeiten aufweist:
Ausführen einer Bitoperation auf zumindest einem Bit des empfangenen Symbols zum Erhalten des zumindest einen vorverarbeiten Prozessdatums (P3a).

7. Das Verfahren nach einem der Ansprüche 4 bis 6, wobei das Vorverarbeiten aufweist:
Ausführen von Instruktionen einer Instruktionsliste (22a, 22b, ..., 22n) zur Vorverarbeitung des zumindest einen Prozessdatums (P3), wobei für jedes Symbol eine feste Anzahl von Instruktionen der Instruktionsliste ausgeführt wird.

8. Das Verfahren nach Anspruch 7, weiter aufweisend:
Empfangen der Instruktionsliste (22a, 22b, 22n) an dem ersten Datenbusteilnehmer (7a, 7b, ..., 7n) von dem Lokalbusmaster (3).

9. Ein Lokalbus (6) mit zumindest einem ersten und einem zweiten Datenbusteilnehmer (7a, 7b, ..., 7n) und einem Lokalbusmaster (3), wobei der Lokalbusmaster (3) aufweist:
ein Mittel zum Senden eines Datenpakets (17) mit Prozessdaten (P1, P2, P3);
der erste Datenbusteilnehmer (7a, 7b, ..., 7n) aufweist:
ein Mittel zum Empfangen des Datenpakets (17) mit Prozessdaten (P1, P2, P3);
ein Mittel zum Vorverarbeiten zumindest eines Prozessdatums (P3) in dem empfangenen Datenpaket (17) in Abhängigkeit der Arbeitstakte, die dem ersten Datenbusteilnehmer (7a, 7b, ..., 7n) zur Verfügung stehen, wobei das zumindest eine Prozessdatum (P3) für den zweiten Datenbusteilnehmer (7a, 7b, ..., 7n) bestimmt ist;
ein Mittel zum Senden des Datenpakets (17) mit dem zumindest einen vorverarbeiteten Prozessdatum (P3a) an den zweiten Datenbusteilnehmer (7a, 7b, ..., 7n);
der zweite Datenbusteilnehmer (7a, 7b, ..., 7n) aufweist:
ein Mittel zum Empfangen des Datenpakets (17) mit dem zumindest einen vorverarbeiteten Prozessdatum (P3a);
Mittel zum Weiterverarbeiten des zumindest einen vorverarbeiteten Prozessdatums (P3a).

10. Der Lokalbus (6) nach Anspruch 9, wobei das Datenpaket (17) eine Vielzahl von Symbolen aufweist, wobei jedes Symbol eine Anzahl von Bits aufweist.

11. Der Lokalbus (6) nach Anspruch 10, wobei
das Mittel zum Senden des Datenpakets (17) mit den Prozessdaten (P1, P2, P3) angepasst ist, die Prozessdaten (P1, P2, P3) symbolweise in dem Datenpaket (17) zu senden; und
das Mittel zum Senden des Datenpakets (17) mit dem zumindest einen vorverarbeiteten Prozessdatum (P3a) angepasst ist, das zumindest eine vorverarbeitete Prozessdatum (P3a) symbolweise in dem Datenpaket (17) zu senden.

## Claims

1. A method for distributed processing of process data (P1, P2, P3) in a local bus (6) with a local bus master (3) and at least two data bus subscribers (7a, 7b, ..., 7n), the method comprising:
sending a data packet (17) with process data (P1, P2, P3) from the local bus master (3) via the local bus (6);
receiving the data packet (17) at a first data bus subscriber (7a, 7b, ..., 7n);
preprocessing at least one process data item (P3) in the data packet (17) by the first data bus subscriber (7a, 7b, ..., 7n) in dependency of the clock cycles available to the first data bus subscriber (7a, 7b, ..., 7n), wherein the at least one process data item (P3) is intended for the second data bus subscriber (7a, 7b, ..., 7n);
sending the data packet (17) with the at least one preprocessed data item (P3a) via the local bus (6) from the first data bus subscriber (7a, 7b, ..., 7n) to the second data bus subscriber (7a, 7b, ..., 7n);
receiving the data packet (17) with the at least one preprocessed data item (P3a) at the second data bus subscriber (7a, 7b, ..., 7n); and
further processing the at least one preprocessed data item (P3a) by the second data bus subscriber (7a, 7b, ..., 7n).

2. The method according to claim 1, wherein the preprocessing comprises writing the at least one process data item (P3a) into the data packet (17).

3. The method according to any of the preceding claims, wherein the preprocessing comprises:
reading the at least one process data item (P3) from the data packet (17).

4. The method according to any of the preceding claims, wherein the data packet (17) comprises a plurality of symbols, each symbol having a plurality of bits.

5. The method according to claim 4, wherein the preprocessing comprises a bit-granular preprocessing of a received symbol.

6. The method according to claim 5, wherein the bit-granular preprocessing comprises:
performing a bit operation on at least one bit of the received symbol to obtain the at least one preprocessed process data item (P3a).

7. The method according to any of claims 4 to 6, wherein the preprocessing comprises:
executing instructions of an instruction list (22a, 22b, ..., 22n) for the preprocessing of the at least one process data item (P3), wherein a fixed number of instructions from the instruction list is performed for each symbol.

8. The method according to claim 7, further comprising:
receiving the instruction list (22a, 22b, ..., 22n) at the first data bus subscriber (7a, 7b, ..., 7n) from the local bus master (3).

9. A local bus (6) with at least a first and a second data bus subscriber (7a, 7b, ..., 7n) and a local bus master (3), wherein the local bus master (3) comprises:
means for sending a data packet (17) with process data (P1, P2, P3);
the first data bus subscriber (7a, 7b, ..., 7n) comprises:
means for receiving the data packet (17) with process data (P1, P2, P3);
means for preprocessing at least one process data item (P3) of the received data packet (17) in dependency of the clock cycles available to the first data bus subscriber (7a, 7b, ..., 7n), wherein the at least one process data item (P3) is intended for the second data bus subscriber (7a, 7b, ..., 7n);
means for sending the data packet (17) with the at least one preprocessed process data item (P3a) to the second data bus subscriber (7a, 7b, ..., 7n);
the second data bus subscriber (7a, 7b, ..., 7n) comprises:
means for receiving the data packet (17) with the at least one preprocessed process data item (P3a);
means for further processing the at least one preprocessed process data item (P3a).

10. The local bus (6) according to claim 9, wherein the data packet (17) comprises a plurality of symbols, each symbol having a plurality of bits.

11. The local bus (6) according to claim 10, wherein
the means for sending the data packet (17) with the process data (P1, P2, \P3) is adapted to send the process data (P1, P2, P3) in the data packet (17) symbol by symbol; and
the means for sending the data packet (17) with the at least one preprocessed process data item (P3a) is adapted to send the at least one preprocessed process data item (P3a) in the data packet (17) symbol by symbol.

## Revendications

1. Un procédé pour le traitement réparti de données de processus (P1, P2, P3) dans un bus local (6), avec un maître de bus local (3) et au moins deux participants de bus de données (7a, 7b, ..., 7n), le procédé comprenant :
l'émission d'un paquet de données (17) avec des données de processus (P1, P2, P3), par le maître de bus local (3) par l'intermédiaire du bus local (6) ;
la réception du paquet de données (17) au niveau d'un premier participant de bus de données (7a, 7b, ..., 7n) ;
le prétraitement d'au moins une donnée de processus (P3) dans un paquet de données (17), par l'intermédiaire du premier participant de bus de données (7a, 7b, ..., 7n) en fonction des cycles de travail qui sont disponibles au premier participant de bus de données (7a, 7b, ..., 7n), l'au moins une donnée de processus (P3) étant destinée au deuxième participant de bus de données (7a, 7b, ..., 7n) ;
l'émission du paquet de données (17) avec l'au moins une donnée de processus prétraitée (P3a), sur le bus local (6) vers le deuxième participant de bus de données (7a, 7b, ..., 7n) par l'intermédiaire du premier participant de bus de données (7a, 7b, ..., 7n) ;
la réception du paquet de données (17) avec l'au moins une donnée de processus prétraitée (P3a), au niveau du deuxième participant de bus de données (7a, 7b, ..., 7n) ; et
le traitement ultérieur de l'au moins une donnée de processus prétraitée (P3a), par l'intermédiaire du deuxième participant de bus de données (7a, 7b, ..., 7n).

2. Le procédé selon la revendication 1, dans lequel le prétraitement comprend :
l'écriture de l'au moins une donnée de processus (P3a) dans le paquet de données (17).

3. Le procédé selon l'une des revendications précédentes, dans lequel le prétraitement comprend :
la lecture de l'au moins une donnée de processus (P3) à partir du paquet de données (17).

4. Le procédé selon l'une des revendications précédentes, dans lequel le paquet de données (17) comporte une pluralité de symboles, chaque symbole comportant un certain nombre de bits.

5. Le procédé selon la revendication 4, dans lequel le prétraitement comprend :
le prétraitement granulaire bit à bit d'un symbole reçu.

6. Le procédé selon la revendication 5, dans lequel le prétraitement granulaire bit à bit comprend :
l'exécution d'une opération binaire sur au moins un bit du symbole reçu afin d'obtenir l'au moins une donnée de processus prétraitée (P3a).

7. Le procédé selon l'une des revendications 4 à 6, dans lequel le prétraitement comprend :
l'exécution d'instructions d'une liste d'instructions (22a, 22b, ..., 22n) pour le prétraitement de l'au moins une donnée de processus (P3), un nombre fixe d'instructions de la liste d'instructions étant exécuté pour chaque symbole.

8. Le procédé selon la revendication 7, comprenant en outre :
la réception de la liste d'instructions (22a, 22b, 22n) au niveau du premier participant de bus de données (7a, 7b, ..., 7n) par le maître de bus local (3).

9. Un bus local (6) avec au moins un premier et un deuxième participant de bus de données (7a, 7b, ..., 7n) et un maître de bus local (3), le maître de bus local (3) comprenant :
un moyen pour émettre un paquet de données (17) avec des données de processus (P1, P2, P3) ;
le premier participant de bus de données (7a, 7b, ..., 7n) comprenant :
un moyen pour recevoir le paquet de données (17) avec des données de processus (P1, P2, P3) ;
un moyen pour prétraiter au moins une donnée de processus (P3) dans le paquet de données reçu (17) en fonction des cycles de travail qui sont disponibles au premier participant de bus de données (7a, 7b, ..., 7n), l'au moins une donnée de processus (P3) étant destinée au deuxième participant de bus de données (7a, 7b, ..., 7n) ;
un moyen pour émettre vers le deuxième participant de bus de données (7a, 7b, ..., 7n) le paquet de données (17) avec l'au moins une donnée de processus prétraitée (P3a) ;
le deuxième participant de bus de données (7a, 7b, ..., 7n) comprenant :
un moyen pour recevoir le paquet de données (17) avec l'au moins une donnée de processus prétraitée (P3a) ;
un moyen pour traiter ultérieurement l'au moins une donnée de processus prétraitée (P3a).

10. Le bus local (16) selon la revendication 9, dans lequel le paquet de données (17) comprend une pluralité de symboles, chaque symbole comprenant un certain nombre de bits.

11. Le bus local (6) selon la revendication 10, dans lequel
le moyen pour émettre le paquet de données (17) avec les données de processus (P1, P2, P3) est adapté pour émettre les données de processus (P1, P2, P3) symbole par symbole dans le paquet de données (17) ; et
le moyen pour émettre le paquet de données (17) avec l'au moins une donnée de processus prétraitée (P3a) est adapté pour émettre au moins une donnée de processus prétraitée (P3a) symbole par symbole dans le paquet de données (17).
